# EUROPEAN PATENT APPLICATION

(11) **EP 4 513 316 A1**
(43) Date of publication of application: **26.02.2025**
(21) Application number: 23811065.4
(22) Date of filing: 23.05.2023
(51) Int. Cl.: G06F 3/04812

(54) **CONTENT EXCERPTION METHOD AND DEVICE**

(30) Priority: 27.05.2022 CN 202210594860
(71) Applicant: Huawei Technologies Co., Ltd., Shenzhen, Guangdong 518129 (CN)
(72) Inventor: HU, Yue, Shenzhen, Guangdong 518129 (CN); JIANG, Xiuping, Shenzhen, Guangdong 518129 (CN); PENG, Kai, Shenzhen, Guangdong 518129 (CN)
(74) Representative: Pfenning, Meinig & Partner mbB
(86) International application number: PCT/CN2023/095882
(87) International publication number: WO 2023/226994

(57) **Abstract**

This application discloses a content excerption method and a device, and relates to the field of terminal technologies, to provide a user with more convenient and efficient content excerption experience. In this application, an electronic device can predetermine an excerption intention of the user based on an operation used to represent an intention of the user to excerpt content on an interface, so that an interface region can be recognized and content in the interface region can be recognized and obtained in advance. In this way, when the user triggers an excerption operation, the obtained content is directly excerpted to a target position on a target interface, to provide the user with smoother content excerption experience. For example, if an operation intention of the user is excerpting content on an interface in a picture form, the electronic device may recognize an interface region and content in the interface region and obtain a picture in advance. For another example, if an operation intention of the user is excerpting content on an interface in an editable form, the electronic device may recognize an interface region and content in the interface region and extract editable content in advance.

## Description

This application claims priority to Chinese Patent Application No. 202210594860.7, filed with the China National Intellectual Property Administration on May 27, 2022 and entitled "CONTENT EXCERPTION METHOD AND DEVICE", which is incorporated herein by reference in its entirety.

### TECHNICAL FIELD

Embodiments of this application relate to the field of terminal technologies, and in particular, to a content excerption method and a device.

### BACKGROUND

In a scenario such as learning or working of a user, the user usually needs to record content, for example, a picture, text, a table, a formula, or the like on an interface such as a file, a web page, or an application interface. To improve efficiency and convenience of recording content by the user, an electronic device may provide an excerption function. The excerption function is used to quickly record, on another interface, content on an interface. The user does not need to manually record the content.

However, in a conventional excerption function, only picture content can be excerpted through screenshotting whereas text, a table, a formula, or the like cannot be excerpted. In addition, during picture content excerption based on the conventional excerption function, an electronic device saves to-be-excerpted picture content in a form of a picture when receiving an operation of selecting the picture content on an interface A by a user; and imports the picture to an interface B when receiving an operation of importing the picture to the interface B through a picture import channel by the user. This method is complex for the user.

### SUMMARY

This application provides a content excerption method and a device, to provide a user with more convenient and efficient content excerption experience.

To achieve the foregoing objective, the following technical solutions are used in embodiments of this application.

According to a first aspect, a content excerption method is provided. The method is applied to an electronic device in an excerption state. The method includes: The electronic device displays a first interface. The electronic device receives a first operation of a user. The first operation is used to represent an excerption intention of the user for content on the first interface, for example, an excerption intention of excerpting the content in a picture form or an excerption intention of excerpting the content in an editable form. The electronic device obtains, in a corresponding form based on the excerption intention corresponding to the first operation, content in a first interface region selected by the user on the first interface.

For example, if the excerption intention of the user is excerpting the content in the picture form, the electronic device obtains, in the picture form, the content in the first interface region selected by the user on the first interface.

For another example, if the excerption intention of the user is excerpting the content in the editable form, the electronic device obtains, in the editable form, the content in the first interface region selected by the user on the first interface.

The excerption in the editable form herein is excerption of extracted content that can be modified (for example, including text, a symbol, a formula, a table, or the like that can be modified), rather than content in the picture form. For example, that the extracted content can be modified is that text in the content can be deleted, new text can be added, a text font/font size/style/color number can be changed, or the like. Certainly, in embodiments of this application, the content excerpted in the picture form can also be modified by the user. However, the modification is limited to an overlay modification (for example, doodling, drawing a line, covering with text, adding a filter, covering with mosaics, adding a sticker, adding a border, adjusting a color, or the like) at an upper layer of a picture or a modification (for example, cropping) to a picture size, and does not include a modification to content included in the picture.

Optionally, the first operation may be an operation "acting on" the first interface, or the first operation may not directly act on the first interface. For example, the first operation may include but is not limited to a tap (for example, single-tap or double-tap) operation, a double-tap operation, a touch and hold operation, a box-select operation, a slide operation, a preset gesture operation, a voice operation, a preset physical button pressing operation, an operation of selecting a virtual option (for example, a picture excerption option or an editable text excerption option), or the like. This is not limited in this application. For example, the first operation may be tapping the first interface with a preset gesture, or the first operation may be a specific voice operation and not directly act on the first interface.

In the solution according to the first aspect, the electronic device can predetermine an excerption intention of the user based on an operation used to represent an intention of the user to excerpt content on an interface. In this way, when the user has an editable content excerption requirement, an interface region can be recognized and content in the interface region can be recognized and obtained in advance, to provide the user with smoother content excerption experience. For example, if an operation intention of the user is excerpting content on an interface in the picture form, the electronic device may recognize an interface region and content in the interface region and obtain a picture in advance, to directly excerpt the obtained picture to a target position on a target interface when the user triggers an excerption operation. For another example, if an operation intention of the user is excerpting content on an interface in the editable form, the electronic device may recognize an interface region and content in the interface region and extract editable content in advance, to directly excerpt the obtained editable content to a target position on a target interface when the user triggers an excerption operation.

In a possible implementation, the user is not granted permission to obtain content in the editable form on the first interface.

It may be understood that for an interface on which the user is not granted the permission to obtain (for example, copy or cut) content in the editable form, editable content such as editable text or an editable table or formula can be obtained from the interface based on the method provided in this application. Based on this, the user is provided with more user-friendly content extraction experience.

In a possible implementation, the interface region includes but is not limited to one or more of the following types of content: a picture, text, a symbol, a formula, a table, an icon, a figure, a line, or a video playing sub-interface. A specific form of the content included in the interface region selected by the user is not limited in this application. For content in any form, the electronic device can extract the content in the picture form or the editable form based on an actual operation of the user. Based on this, the user is provided with more user-friendly content extraction experience.

In a possible implementation, when the excerption intention of the user is excerpting the content in the editable form, that the electronic device obtains, in the corresponding form based on the excerption intention corresponding to the first operation, the content in the first interface region selected by the user on the first interface includes: The electronic device extracts the content in the first interface region in the editable form. Based on this, the electronic device can recognize an interface region and content in the interface region and extract editable content in advance based on a requirement of the user for content excerption in the editable form, to directly excerpt the obtained editable content to a target position on a target interface when the user triggers an excerption operation.

In a possible implementation, the first operation is a touch and hold operation performed by the user on the first interface through a touch auxiliary tool. After the electronic device receives the first operation, the method further includes: The electronic device displays a start cursor at a position corresponding to the touch and hold operation. The electronic device determines the first interface region selected by the user on the first interface in response to an operation of moving a position of the start cursor by the user. Based on this, an operation of the user can be simplified. In addition, the electronic device can be further provided with more sufficient time for early recognition, so that the electronic device can respond to the excerption intention of the user more quickly. The touch auxiliary tool may be, for example, a stylus, a touch stylus, a touch ball, or another type of auxiliary device.

In a possible implementation, that the electronic device extracts the content in the first interface region in the editable form includes: The electronic device extracts the content in the first interface region in the editable form by using a text detection algorithm. Based on the text detection algorithm, not only content on an interface for which the user is granted the permission, but also content on an interface for which the user is not granted the permission can be extracted.

In a possible implementation, the electronic device receives the first operation of the user on the first interface. The first operation is used to represent the excerption intention of the user for the content on the first interface. The excerption intention includes excerpting the content in the picture form or excerpting the content in the editable form. That the electronic device obtains, in the corresponding form based on the excerption intention corresponding to the first operation, the content in the first interface region selected by the user on the first interface includes: The electronic device receives a touch and hold operation performed by the user on the first interface through a touch auxiliary tool and an operation of selecting first content on the first interface after the touch and hold operation. The electronic device excerpts the first content in the editable form. Excerpting the first content includes moving the first content in the editable form from the first interface to another interface. Based on this, an operation of the user can be simplified. In addition, when the operation intention of the user is excerpting content on an interface in the editable form, the electronic device can be provided with more sufficient time for early recognition, so that the electronic device can respond to the excerption intention of the user more quickly.

In a possible implementation, when the excerption intention of the user is excerpting the content in the picture form, that the electronic device obtains, in the corresponding form based on the excerption intention corresponding to the first operation, the content in the first interface region selected by the user on the first interface includes: The electronic device captures the first interface region in the picture form. Based on this, the electronic device can recognize an interface region and content in the interface region and obtain a picture in advance based on a requirement of the user for excerption in the picture form, to directly excerpt the obtained picture to a target position on a target interface when the user triggers an excerption operation.

In a possible implementation, the first operation is a box-select operation performed by the user on the first interface through a touch auxiliary tool. Through the first operation used to trigger content excerption in the picture form and select an interface region, an operation of the user can be simplified. In addition, the electronic device can be further provided with more sufficient time for early recognition, so that the electronic device can respond to the excerption intention of the user more quickly.

In a possible implementation, the method further includes: The electronic device adaptively optimizes an interface region corresponding to the box-select operation, and determines the first interface region.

It may be understood that when the user inputs a box-select operation on a touchscreen through a touch auxiliary tool such as a stylus, a touch stylus, or a touch ball, a figure box-selected by the user is usually a non-standard closed figure, for example, an approximate square or an approximate circle. To obtain a picture that is more aesthetic and easy to arrange, the electronic device may adaptively optimize an interface region corresponding to the box-select operation. In particular, because accuracy is difficult to control when the user performs an operation through the touch auxiliary tool, a part that is of an interface region and that includes important information may be missed out. To ensure integrity of excerpted information, the electronic device may adaptively optimize an interface region corresponding to a box-select operation.

In a possible implementation, the method further includes: The electronic device copies or cuts and pastes the obtained content in the first interface region to a corresponding position on a second interface in response to a second operation of the user. The second operation is an operation of excerpting content from the first interface to the second interface. In this application, after the content in the interface region selected by the user is obtained, the content can be directly excerpted to another interface based on an operation of the user, to improve convenience of content excerption.

In a possible implementation, the second operation is an operation of dragging the obtained content in the first interface region from the first interface region to the second interface by the user. In this application, after the content in the interface region selected by the user is obtained, the content can be directly excerpted to another interface through a simple and convenient operation, to improve convenience of content excerption.

In a possible implementation, the method further includes: In response to a third operation of the user, the electronic device obtains, in a corresponding form based on an excerption intention corresponding to the third operation, content in a second interface region selected by the user on the first interface. The electronic device copies or cuts and pastes the obtained content in the second interface region to a corresponding position on a third interface on the electronic device in response to a fourth operation of excerpting content from the first interface to the third interface. Based on this, the electronic device may remain in the excerption state after entering the excerption state, so that content continues to be excerpted from the first interface to the third interface when the user has a requirement. The method can simplify an operation of the user during continual excerption, improve excerption efficiency, and provide the user with more convenient excerption experience.

Optionally, the third operation may be an operation "acting on" the first interface, or the first operation may not directly act on the first interface. For example, the third operation may include but is not limited to a tap operation, a double-tap operation, a touch and hold operation, a box-select operation, a slide operation, a preset gesture operation, a voice operation, a preset physical button pressing operation, an operation of selecting a virtual option, or the like. This is not limited in this application.

Optionally, the third interface is the second interface on which the obtained content in the first interface region is copied/pasted; or the third interface is not the second interface on which the obtained content in the first interface region is copied/pasted, but another interface. A source interface (namely, an interface from which content is excerpted) and a target interface (namely, an interface to which content is excerpted) during continual excerption are not limited in this application. For example, the electronic device may support continual content excerption from the first interface to the second interface, or may support content excerption from the first interface to a plurality of different interfaces.

In a possible implementation, the method further includes: In response to a third operation, the electronic device obtains, in a corresponding form based on an excerption intention corresponding to the third operation, content in an interface region selected by the user on a third interface. The electronic device copies or cuts and pastes the obtained content in the second interface region to a corresponding position on the third interface on the electronic device in response to a fourth operation of excerpting content from the second interface to the third interface. Based on this, the electronic device may remain in the excerption state after entering the excerption state, so that content is excerpted from the second interface to the third interface when the user has a requirement. The method can simplify an operation of the user during continual excerption, improve excerption efficiency, and provide the user with more convenient excerption experience.

Optionally, the third operation may be an operation "acting on" the second interface, or the first operation may not directly act on the second interface. For example, the third operation may include but is not limited to a tap operation, a double-tap operation, a touch and hold operation, a box-select operation, a slide operation, a preset gesture operation, a voice operation, a preset physical button pressing operation, an operation of selecting a virtual option, or the like. This is not limited in this application.

Optionally, the third interface is the first interface, or the third interface is not the first interface but another interface. A source interface (namely, an interface from which content is excerpted) and a target interface (namely, an interface to which content is excerpted) during continual excerption are not limited in this application. For example, the electronic device may support content excerption from the second interface to the first interface after content excerption from the first interface to the second interface, or may support content excerption from the second interface to another interface after content excerption from the first interface to the second interface.

In a possible implementation, the method further includes: The electronic device saves the obtained content in the first interface region in response to a saving operation of the user. In this application, an excerption application may provide the user with various diversified and user-friendly related additional functions, for example, a function of saving obtained content in an interface region, to provide the user with better use experience.

In a possible implementation, the method further includes: The electronic device makes a corresponding modification to the obtained content in the first interface region in response to an editing operation of the user. In this application, an excerption application may provide the user with various diversified and user-friendly related additional functions, for example, a function of modifying obtained content in an interface region, to provide the user with better use experience. In this application, the electronic device makes the modification to the obtained content based on the editing operation of the user, for example, drawing a line, doodling, cropping, rotation, editing text, adding a sticker, adding a filter, adjusting a color, adding a border, or covering with mosaics, or the like on the obtained content in the picture form; or for another example, adding text, deleting text, changing a font, changing a font size, changing a style (such as underscore or bold), changing a color number, or the like on the obtained content in the editable form.

In a possible implementation, the method further includes: The electronic device displays a sharing option interface in response to a sharing operation of the user, so that the user selects a sharing object option for sharing the obtained content in the first interface region. In this application, an excerption application may provide the user with various diversified and user-friendly related additional functions, for example, a function of sharing obtained content in an interface region, to provide the user with better use experience.

In a possible implementation, the method further includes: The electronic device pins the obtained content in the first interface region to a target position in response to an operation of pinning (Pin) the obtained content in the first interface region to the target position by the user. In this application, an excerption application may provide the user with various diversified and user-friendly related additional functions, for example, a function of temporarily pinning obtained content in an interface region to a position on a screen, to provide the user with better user experience.

In a possible implementation, the method further includes: The electronic device enters the excerption state after an excerption function is enabled.

According to a second aspect, an electronic device is provided. The electronic device includes an input detection unit, configured to receive an operation of a user; and a processing unit, configured to support the electronic device in implementing the method according to any possible implementation of the first aspect.

According to a third aspect, an electronic device is provided. The electronic device includes one or more sensors, configured to receive an operation of a user; and a processor, configured to support the electronic device in implementing the method according to any possible implementation of the first aspect.

According to a fourth aspect, a computer-readable storage medium is provided. The computer-readable storage medium stores computer-readable instructions. When the computer-readable instructions are executed by a processor, the method according to any possible implementation of the first aspect is implemented.

According to a fifth aspect, a chip system is provided. The chip system includes a processor and a memory. The memory stores instructions. When the instructions are executed by the processor, the method according to any possible implementation of the first aspect is implemented. The chip system may include a chip, or may include a chip and another discrete component.

According to a sixth aspect, a computer program product is provided. The computer program product includes computer-readable instructions. When the computer-readable instructions are run on a computer, the method according to any possible implementation of the first aspect is implemented.

### BRIEF DESCRIPTION OF DRAWINGS

FIG. 1 is a diagram of a hardware structure of an electronic device according to an embodiment of this application;
FIG. 2 is a diagram of a software structure of an electronic device according to an embodiment of this application;
FIG. 3 is a first diagram of a display effect of an excerption-related shortcut option according to an embodiment of this application;
FIG. 4A is a second diagram of a display effect of an excerption-related shortcut option according to an embodiment of this application;
FIG. 4B-1 and FIG. 4B-2 are a third diagram of a display effect of an excerption-related shortcut option according to an embodiment of this application;

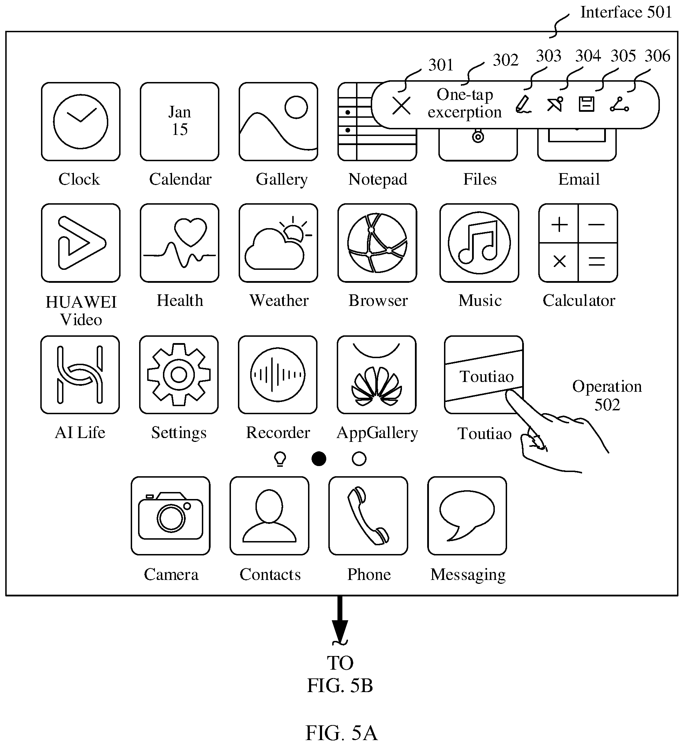

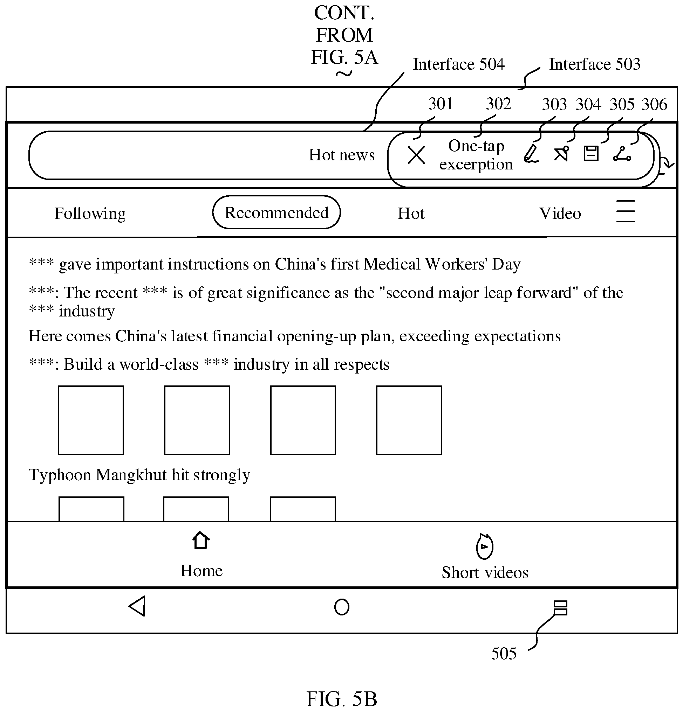

FIG. 5A and FIG. 5B are a fourth diagram of a display effect of an excerption-related shortcut option according to an embodiment of this application;

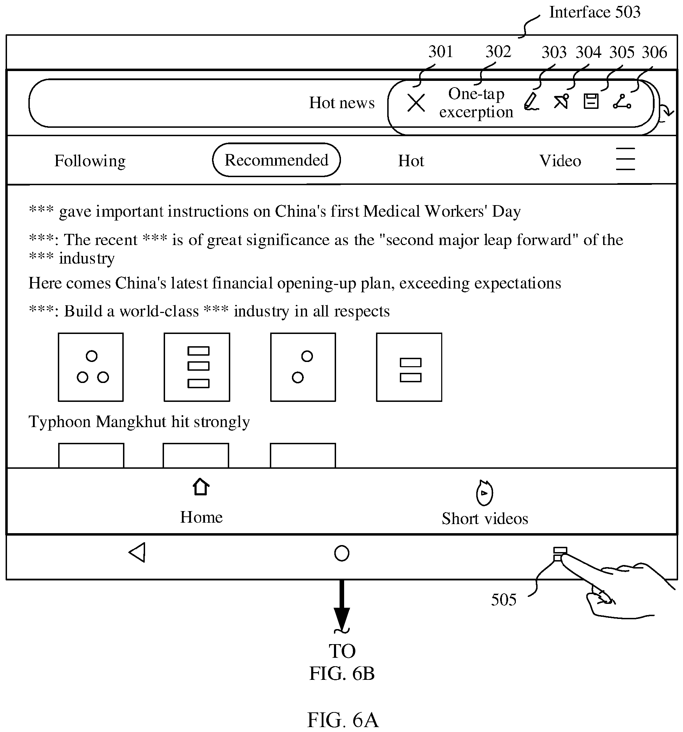

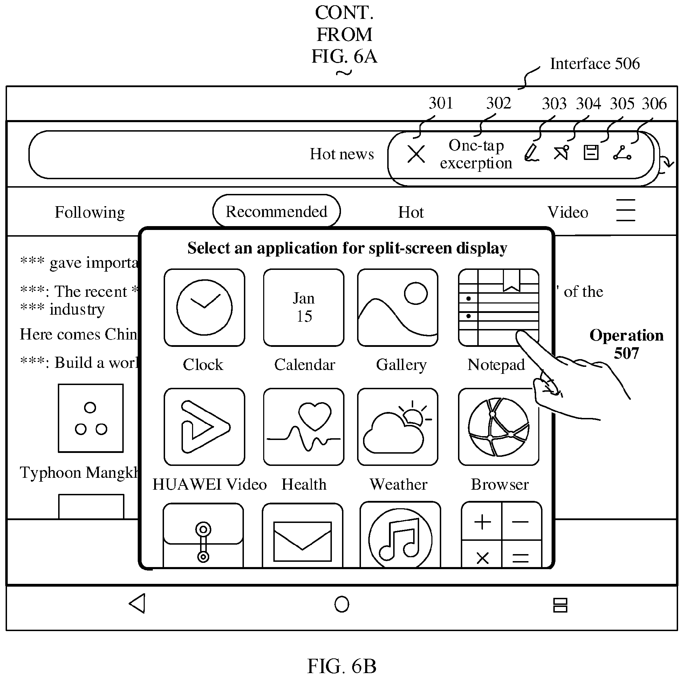

FIG. 6A and FIG. 6B are a diagram of an interface screen splitting process according to an embodiment of this application;

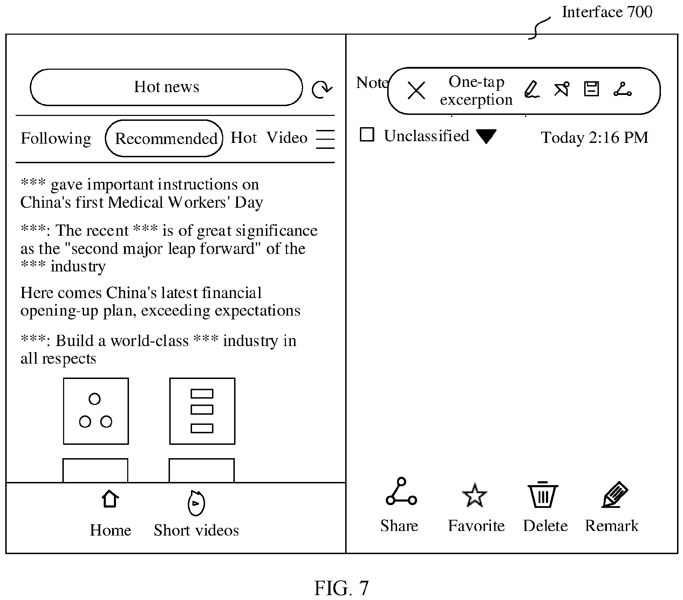

FIG. 7 is a diagram of a display effect of an excerption-related shortcut option in a split-screen scenario according to an embodiment of this application;

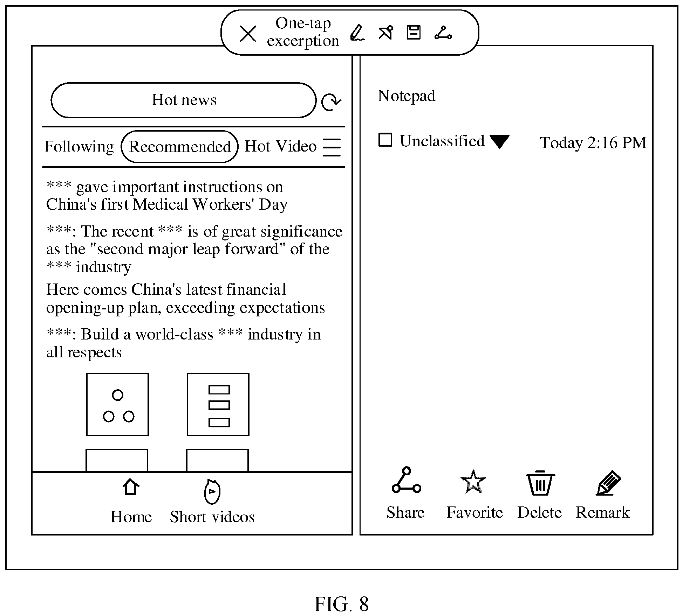

FIG. 8 is a diagram of a display effect of an excerption-related shortcut option in another split-screen scenario according to an embodiment of this application;

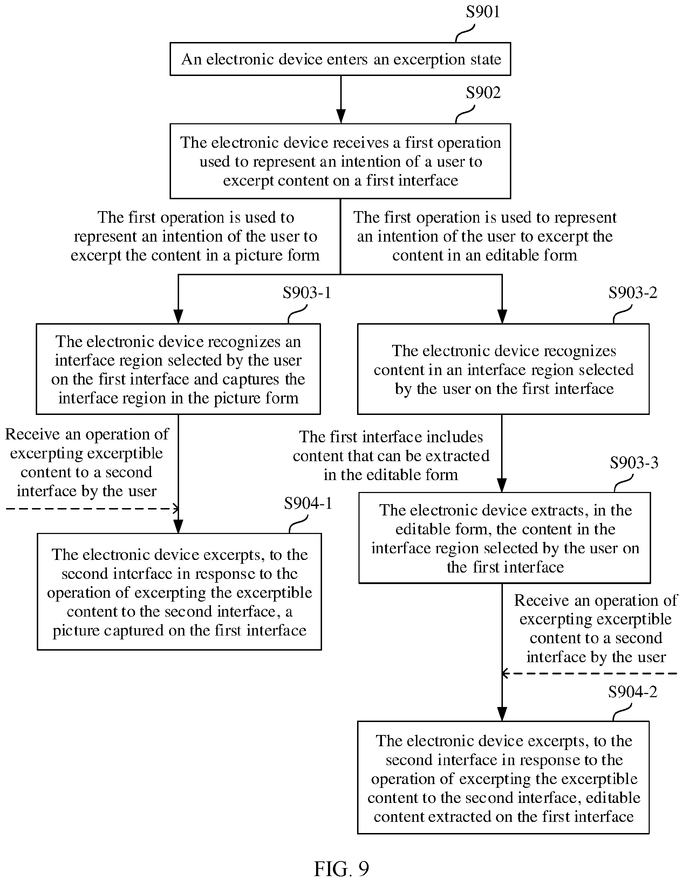

FIG. 9 is a flowchart of a content excerption method according to an embodiment of this application;

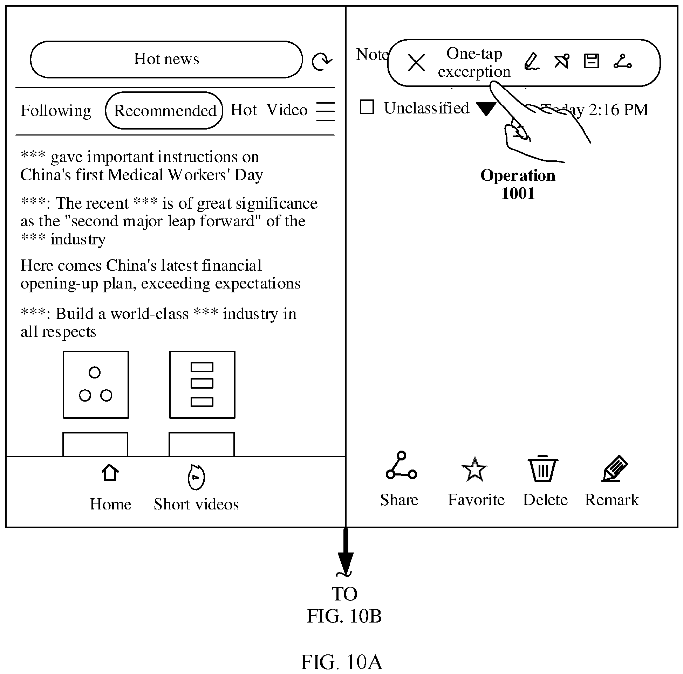

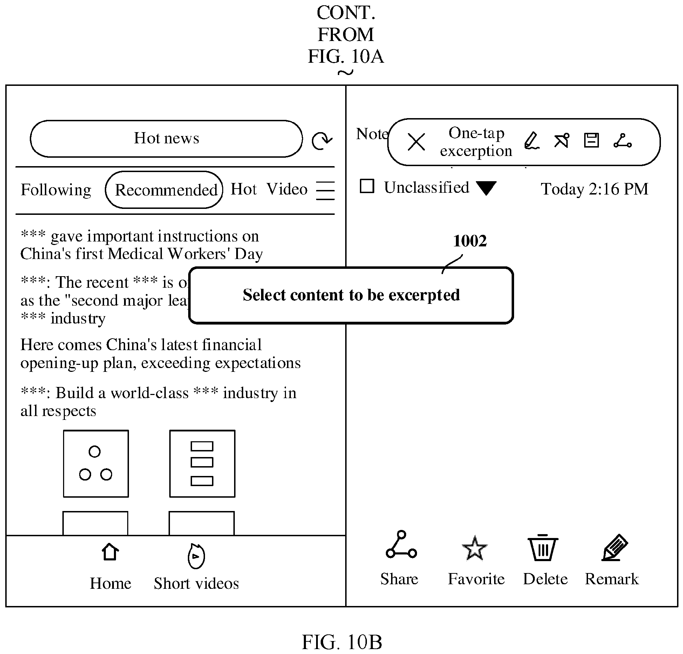

FIG. 10A and FIG. 10B are a diagram of a process in which an electronic device enters an excerption state according to an embodiment of this application;

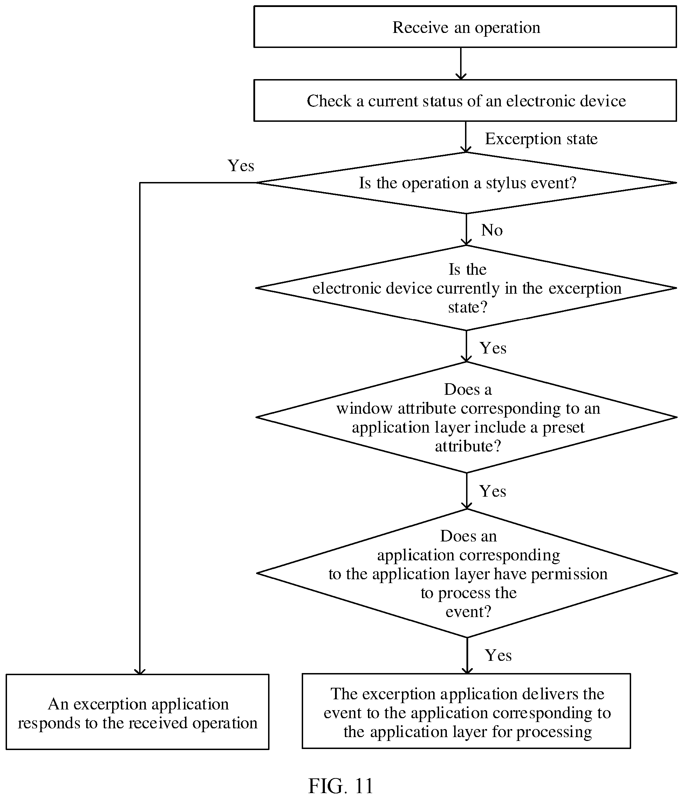

FIG. 11 is a diagram of a process of processing an input event at an excerption layer according to an embodiment of this application;

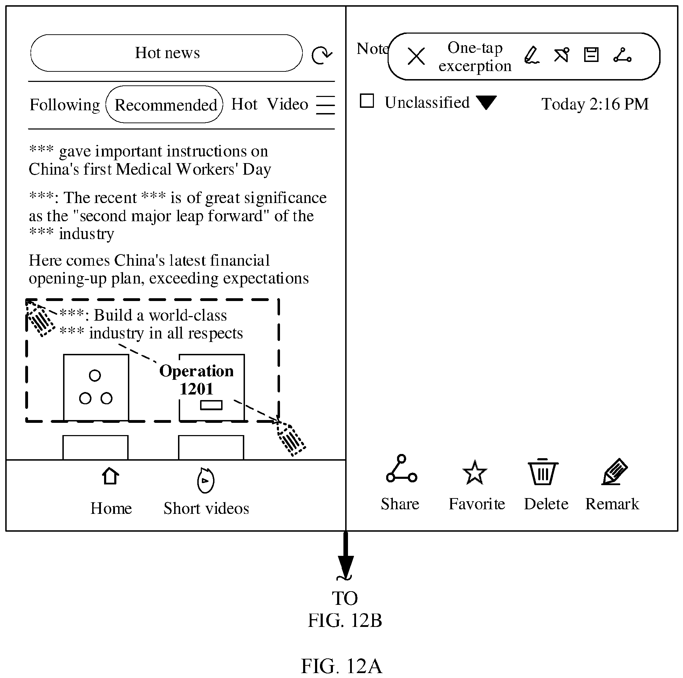

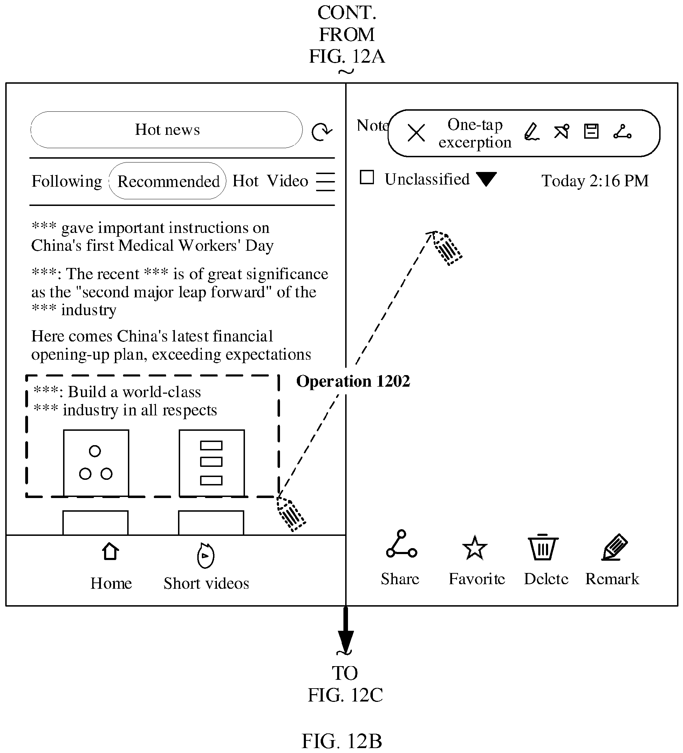

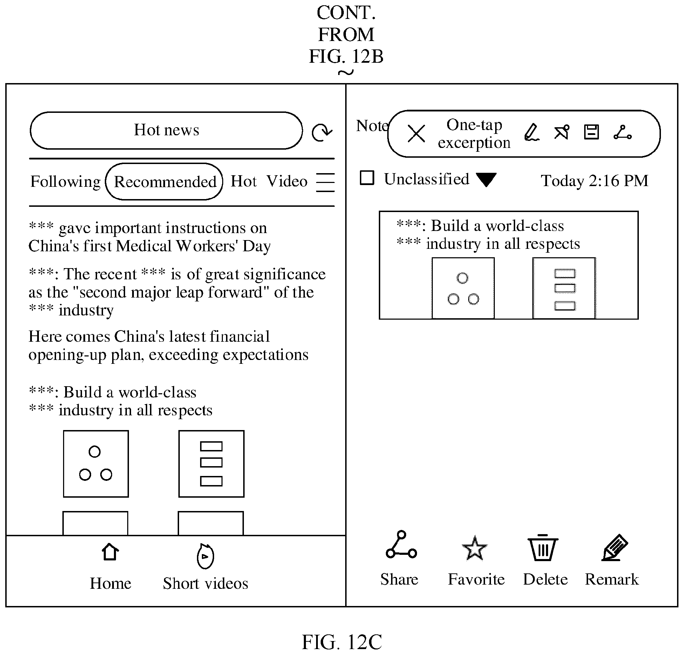

FIG. 12A to FIG. 12C are a first diagram of a content excerption process according to an embodiment of this application;

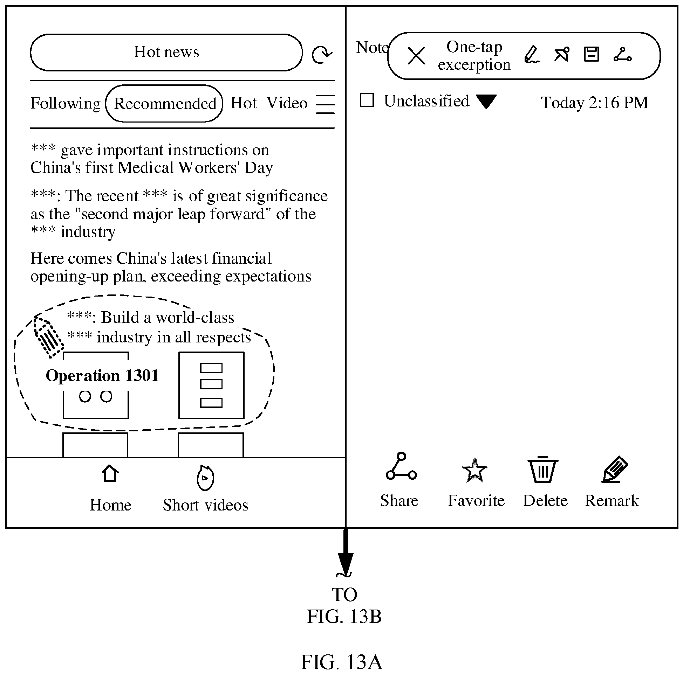

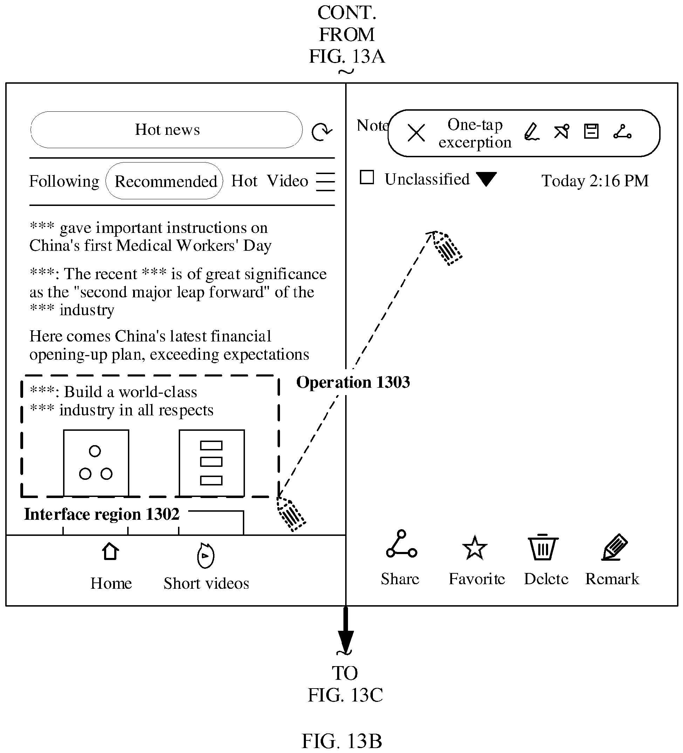

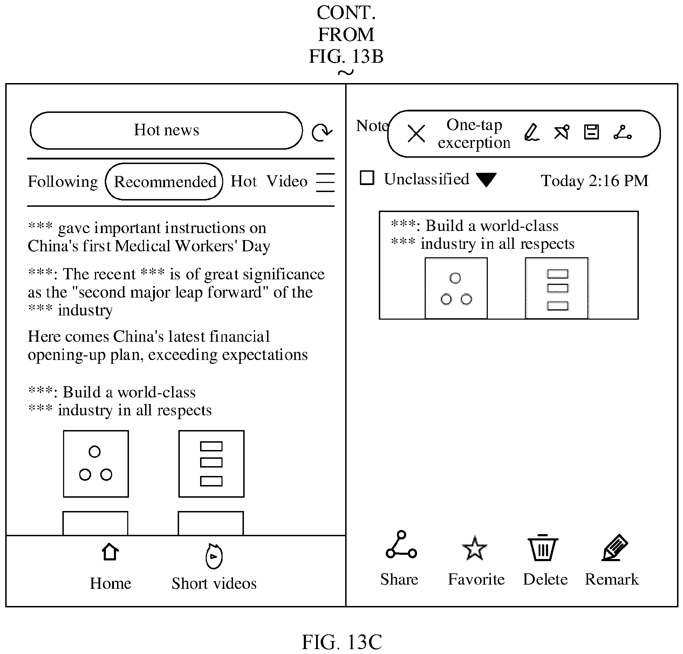

FIG. 13A to FIG. 13C are a second diagram of a content excerption process according to an embodiment of this application;

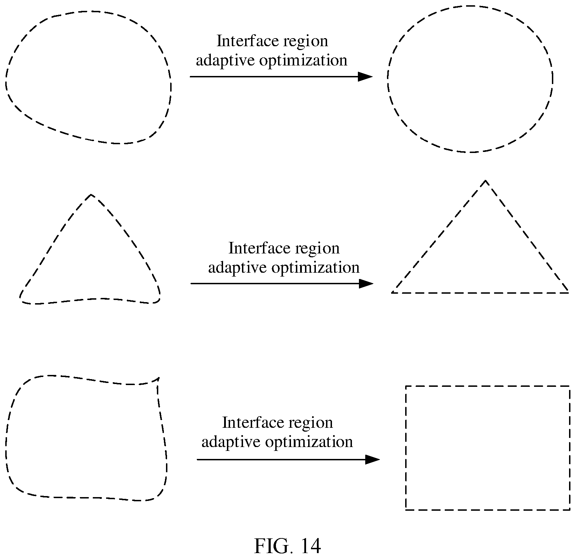

FIG. 14 is a diagram of three types of interface region adaptive optimization according to an embodiment of this application;

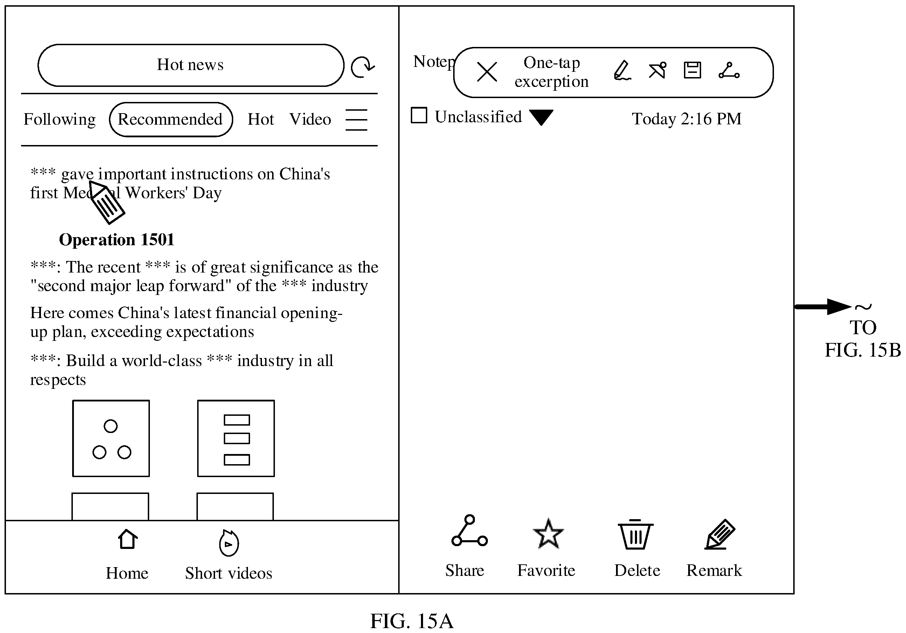

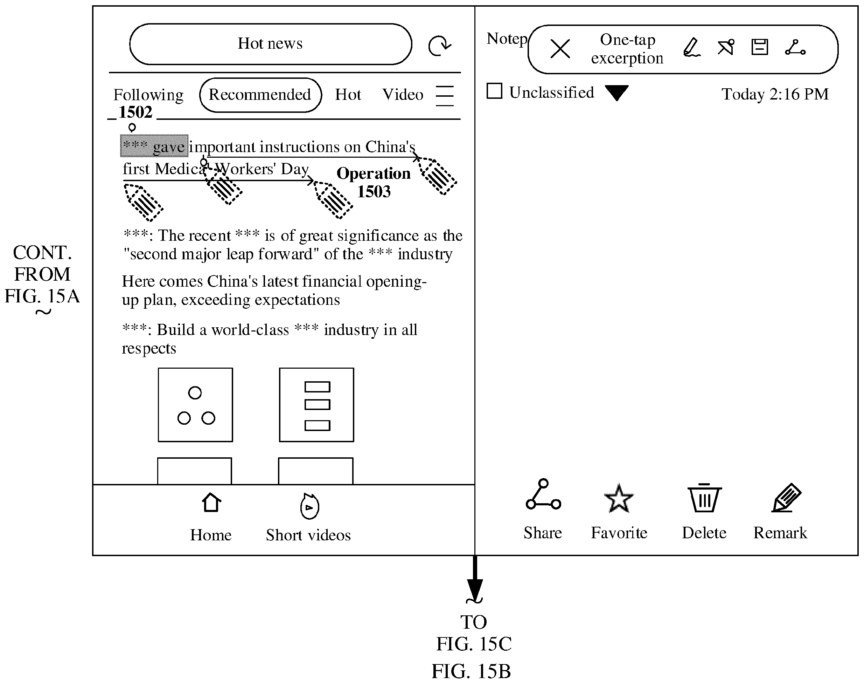

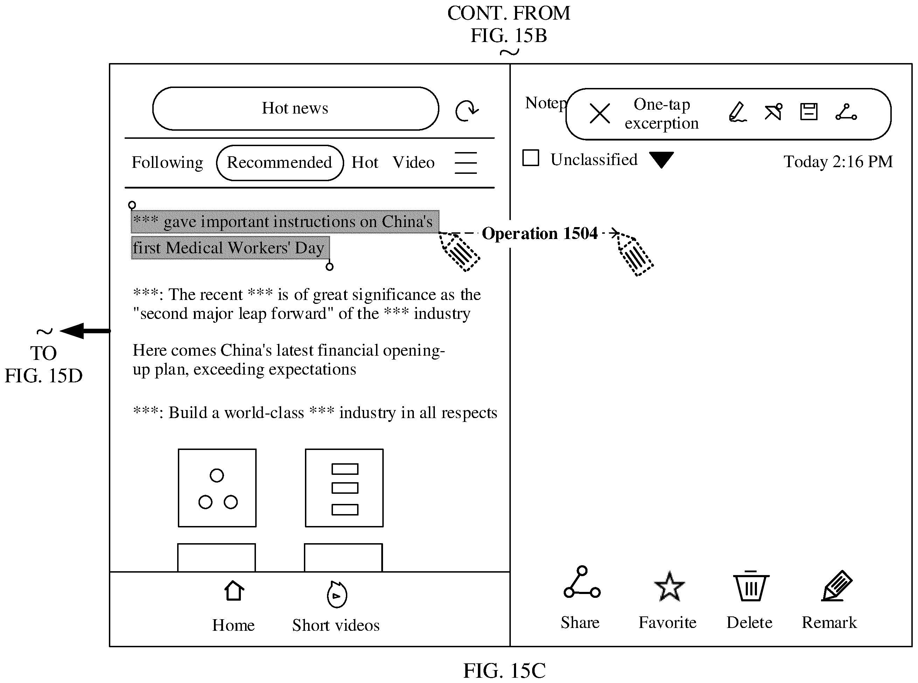

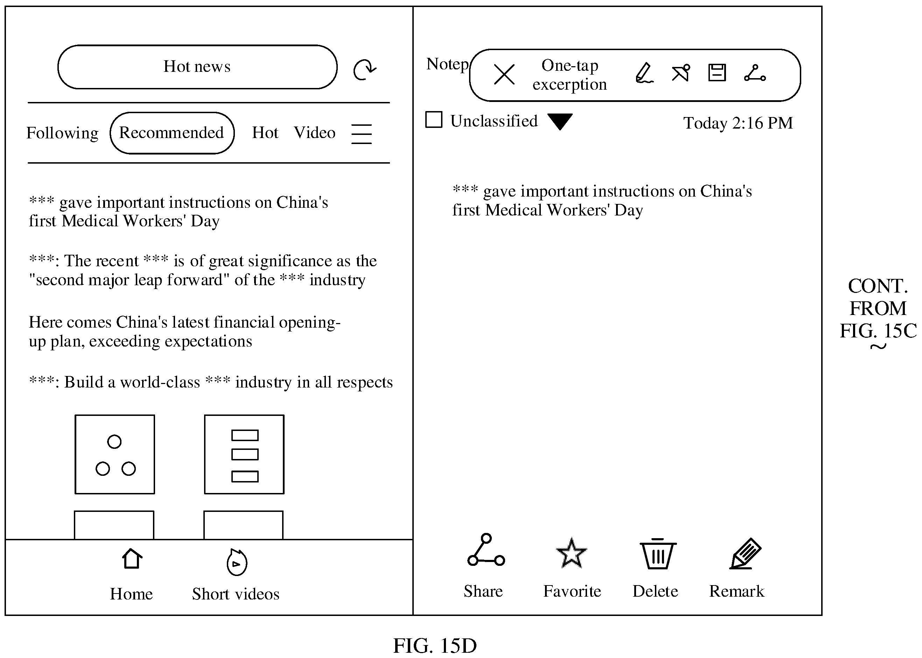

FIG. 15A to FIG. 15D are a third diagram of a content excerption process according to an embodiment of this application;

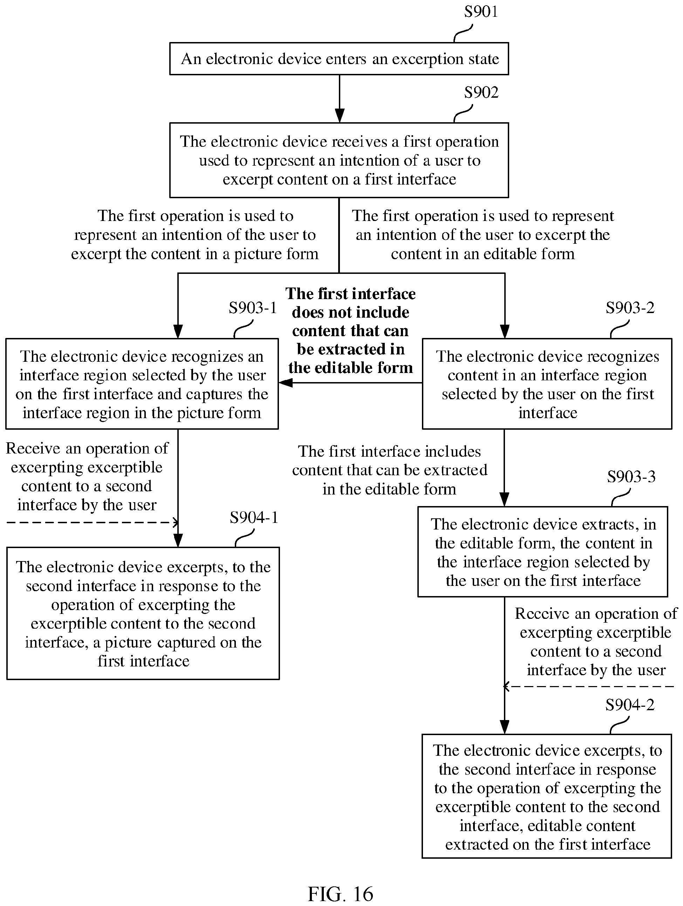

FIG. 16 is a flowchart of another content excerption method according to an embodiment of this application;

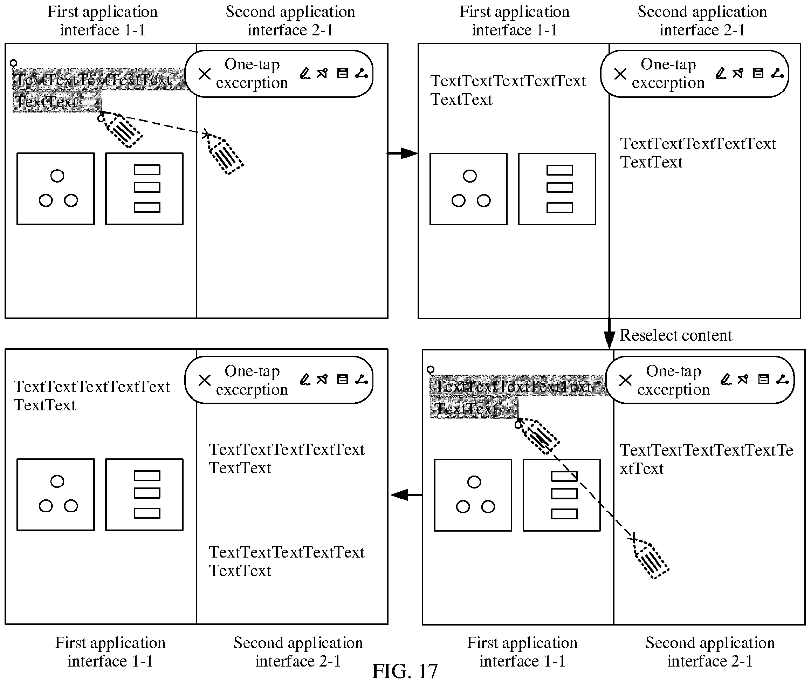

FIG. 17 is a first diagram of a continual excerption process according to an embodiment of this application;

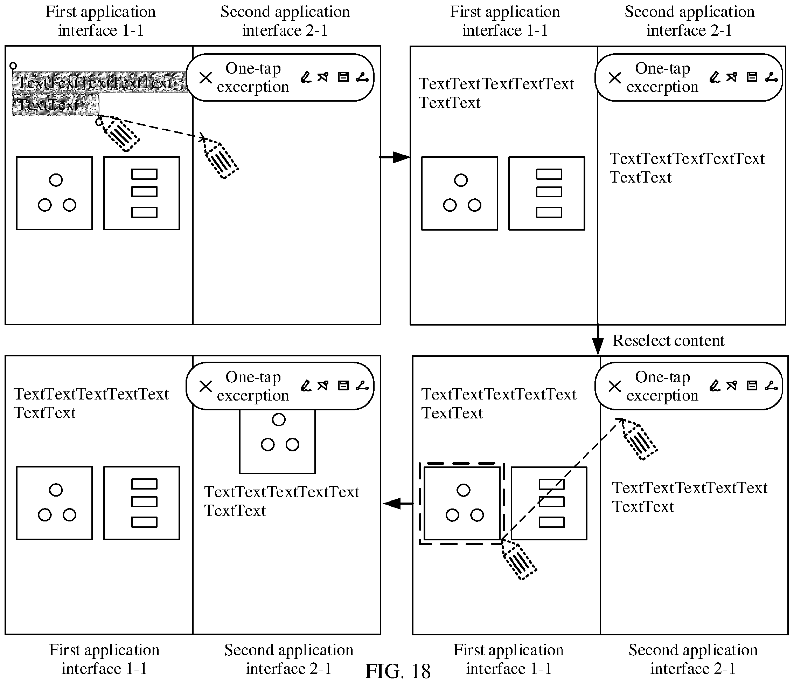

FIG. 18 is a second diagram of a continual excerption process according to an embodiment of this application;

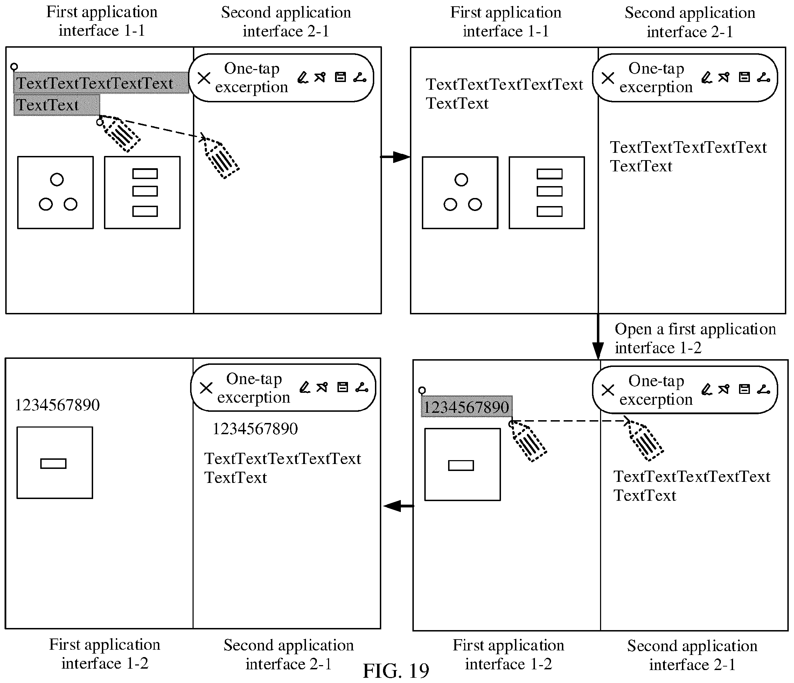

FIG. 19 is a third diagram of a continual excerption process according to an embodiment of this application;

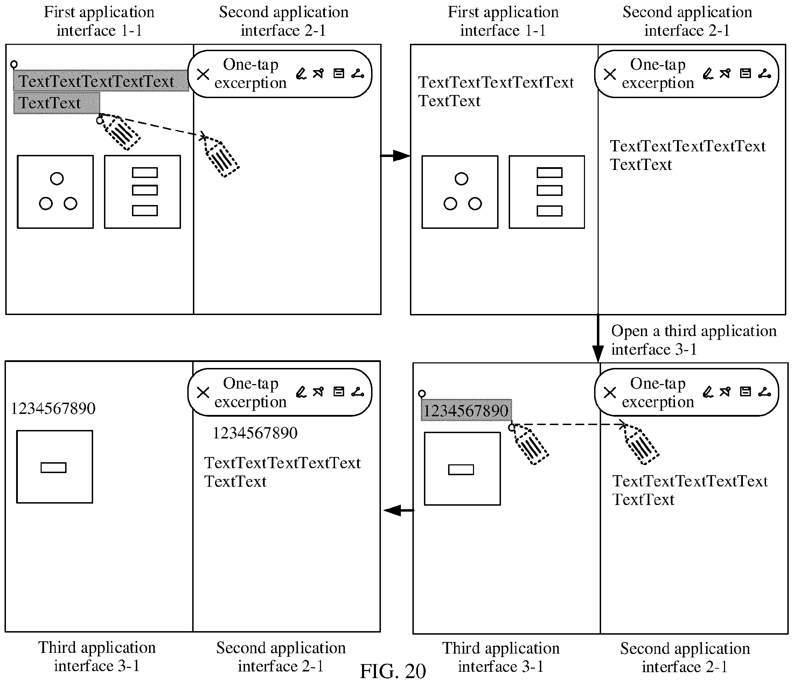

FIG. 20 is a fourth diagram of a continual excerption process according to an embodiment of this application;

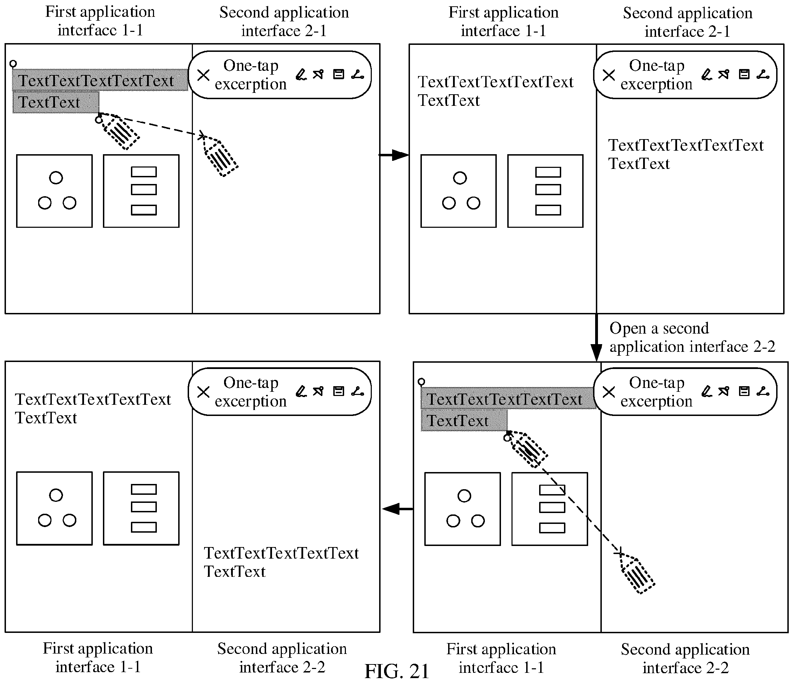

FIG. 21 is a fifth diagram of a continual excerption process according to an embodiment of this application;

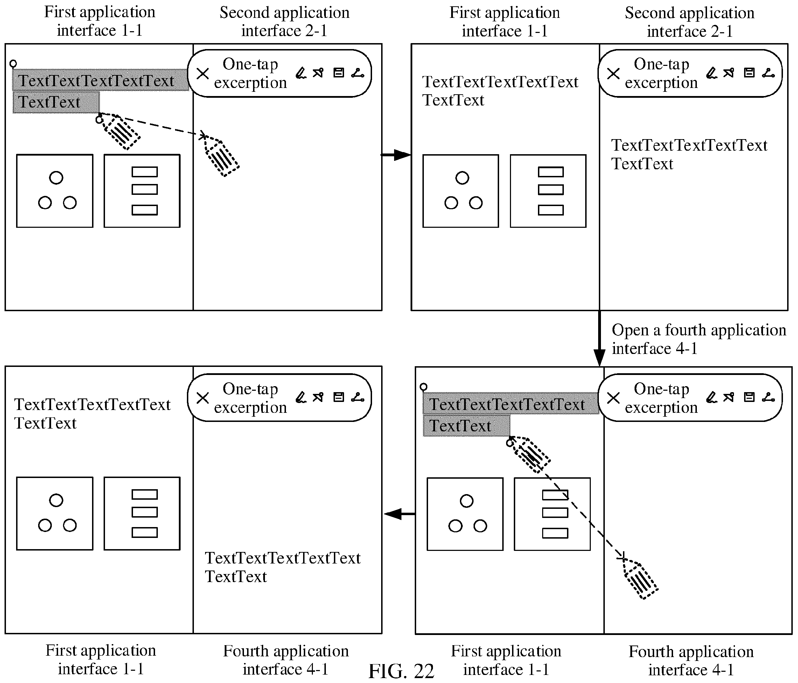

FIG. 22 is a sixth diagram of a continual excerption process according to an embodiment of this application;

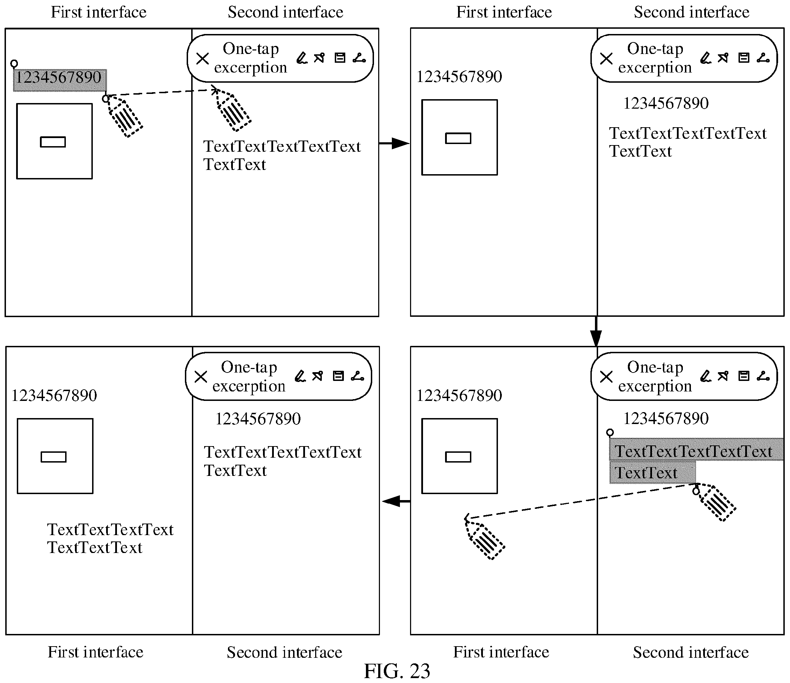

FIG. 23 is a seventh diagram of a continual excerption process according to an embodiment of this application;

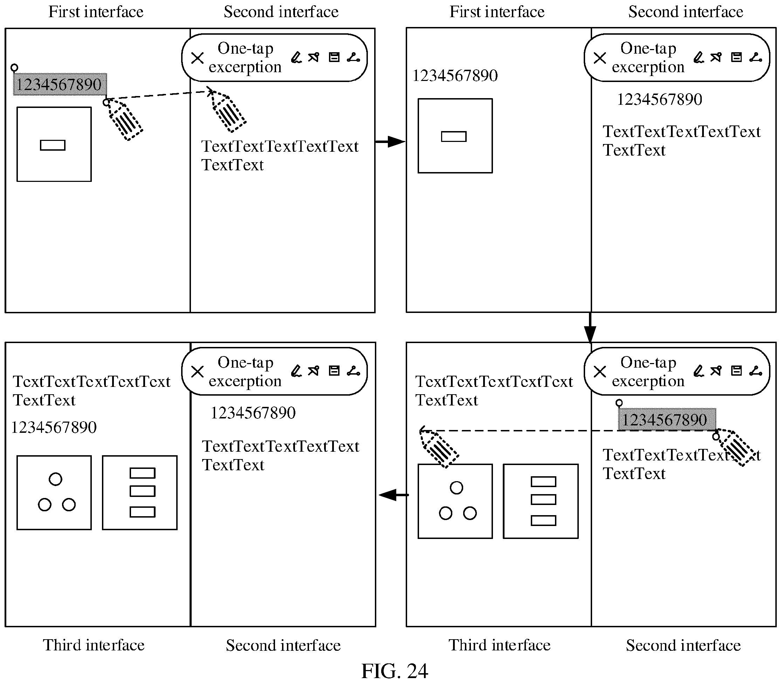

FIG. 24 is an eighth diagram of a continual excerption process according to an embodiment of this application;

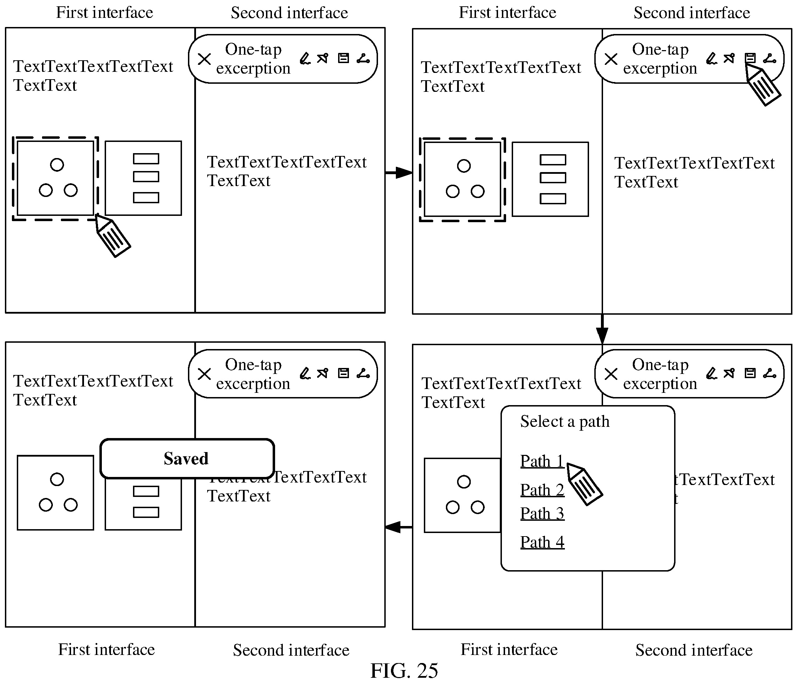

FIG. 25 is a diagram of a process of saving excerptible content according to an embodiment of this application;

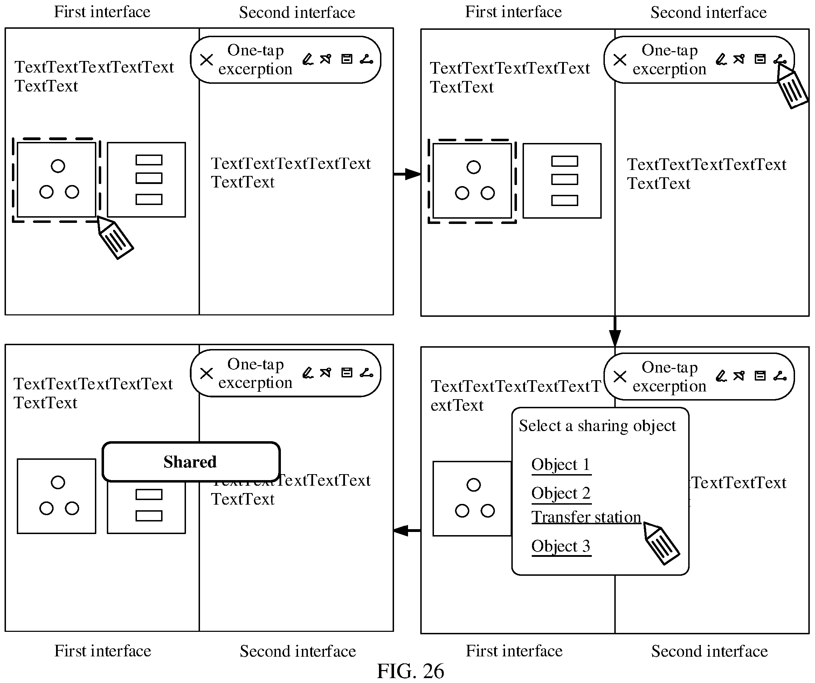

FIG. 26 is a diagram of a process of sharing excerptible content according to an embodiment of this application;

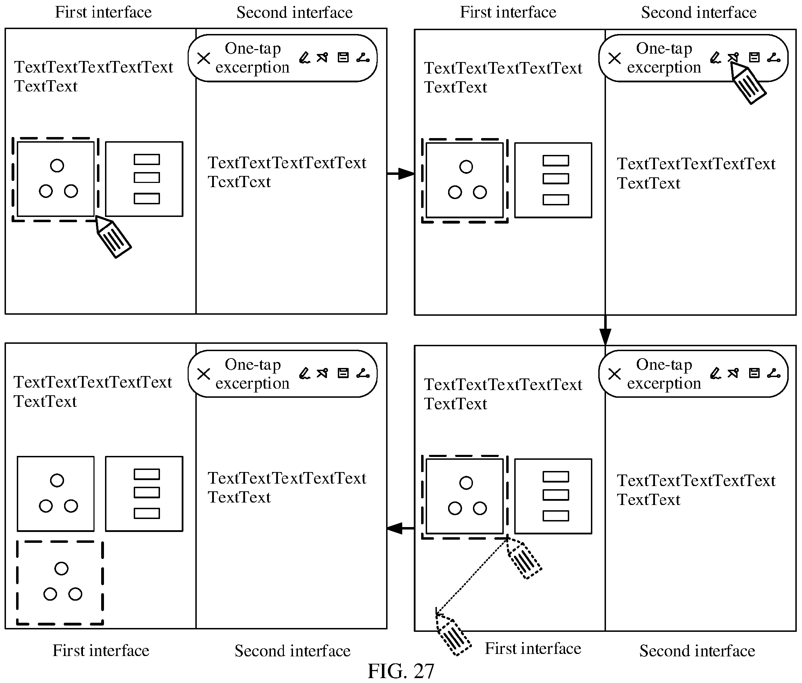

FIG. 27 is a diagram of a process of pinning (Pin) excerptible content according to an embodiment of this application;

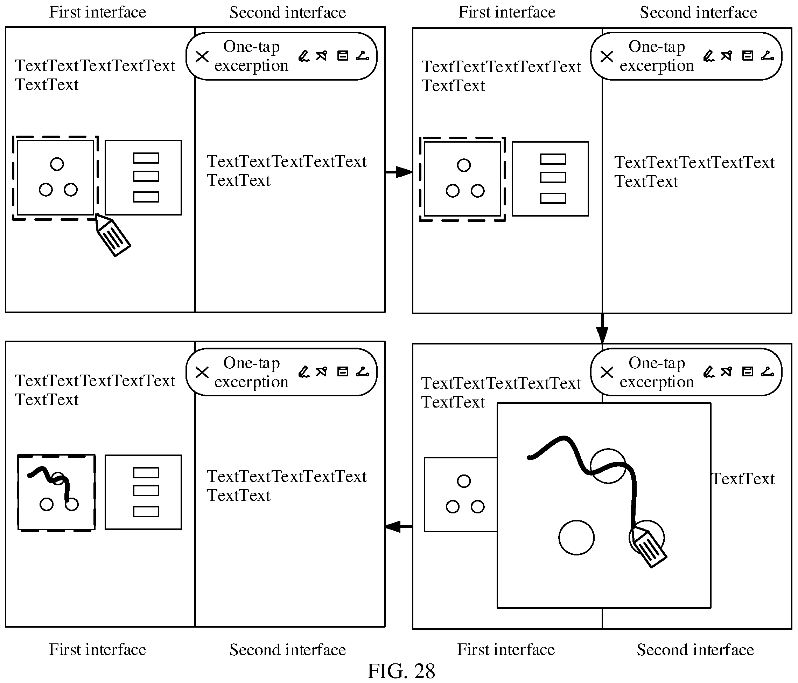

FIG. 28 is a diagram of a process of modifying excerptible content according to an embodiment of this application; and

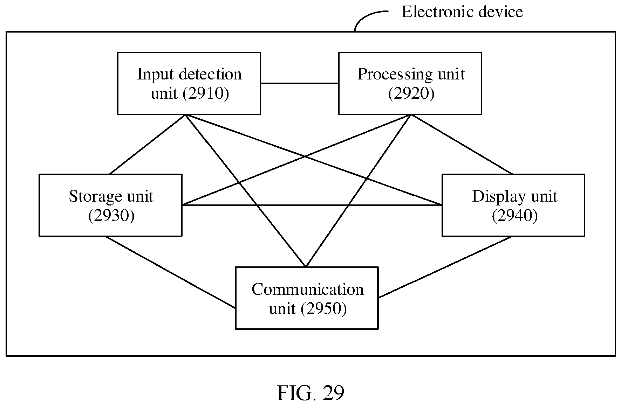

FIG. 29 is a block diagram of a hardware structure of an electronic device according to an embodiment of this application.

### DESCRIPTION OF EMBODIMENTS

Technical solutions in embodiments of this application are described below with reference to the accompanying drawings in embodiments of this application. In descriptions of embodiments of this application, "/" means "or" unless otherwise specified. For example, A/B may represent A or B. In this specification, "and/or" describes only an association relationship between associated objects and represents that three relationships may exist. For example, A and/or B may represent the following three cases: Only A exists, both A and B exist, and only B exists. In addition, in the descriptions of embodiments of this application, "a plurality of" means two or more.

The terms "first" and "second" mentioned below are merely intended for a purpose of description, and shall not be understood as an indication or implication of relative importance or implicit indication of a quantity of indicated technical features. Therefore, features defined with "first" and "second" may explicitly or implicitly include one or more such features. In the descriptions of embodiments, unless otherwise specified, "a plurality of" means two or more.

To provide a user with more convenient and efficient content excerption experience, embodiments of this application provide a content excerption method. In the method, an excerption intention of the user, such as a specific form of content that the user intends to excerpt, is determined based on an operation of the user, to directly recognize and excerpt the content in the form. Through the method, content on an interface can be excerpted not only in a picture form, but also in an editable form.

In particular, for an interface on which the user is not granted permission to obtain a picture (for example, save a picture), content can be excerpted from the interface in the picture form based on the method provided in embodiments of this application. In addition, for an interface on which the user is not granted permission to obtain (for example, copy or cut) editable content, editable content such as editable text or an editable table or formula can be excerpted from the interface based on the method provided in embodiments of this application.

The content excerption method provided in embodiments of this application may be applied to any type of electronic device having an interface display function. For example, the electronic device may include but is not limited to a smartphone, a netbook, a tablet computer, a personal computer (personal computer, PC), a palmtop computer, a vehicle-mounted device, a wearable device (such as a smartwatch, a smart band, or smart glasses), a camera (such as a single-lens reflex camera or a card camera), a smart television, a personal digital assistant (personal digital assistant, PDA), a portable multimedia player (portable multimedia player, PMP), a projection device, a smart screen device, an augmented reality (augmented reality, AR)/virtual reality (virtual reality, VR) device, a mixed reality (mixed reality, MR) device, a television, a motion sensing game console in a human-machine interaction scenario, or the like. A specific function and structure of the electronic device are not limited in this application.

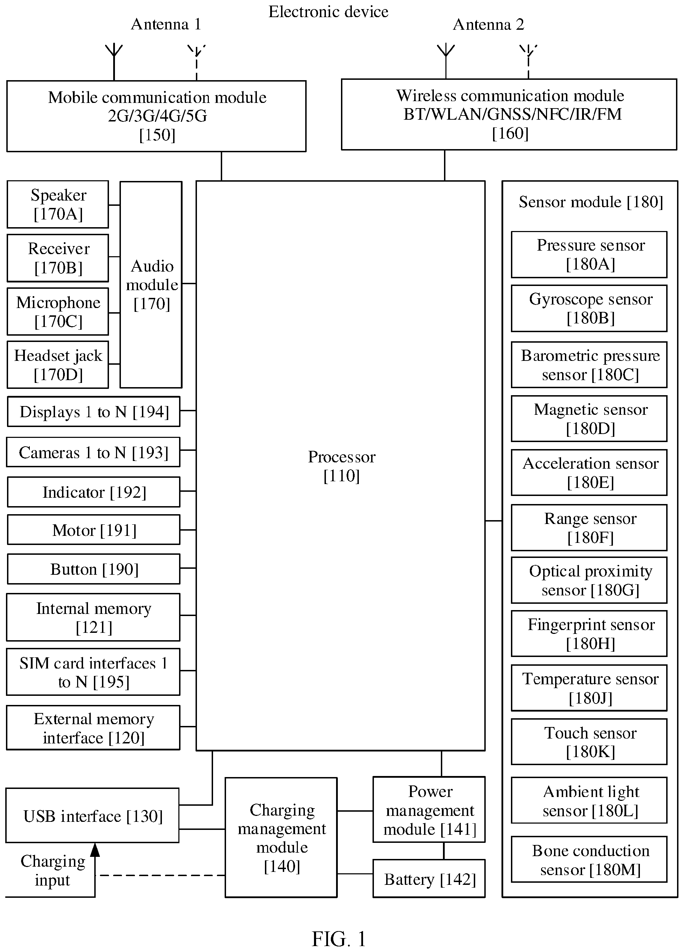

In an example, FIG. 1 is a diagram of a hardware structure of an electronic device according to an embodiment of this application by using a smartphone as an example. As shown in FIG. 1, the electronic device may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a range sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device. In some other embodiments of this application, the electronic device may include more or fewer components than those shown in the figure, have some components combined, have some components split, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), an audio processor/digital processor (the audio processor), a controller, a memory, a video codec, an audio codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device. The controller may generate an operation control signal based on an operation code and a time sequence signal of the user's operation instruction, to complete control of instruction fetching and instruction execution. For example, a memory may be further disposed in the processor 110, and is configured to store instructions and data. In some embodiments, the memory in the processor 110 is a cache. The memory may store an instruction or data that is used or cyclically used by the processor 110. If the processor 110 needs to use the instruction or the data again, the instruction or the data may be directly called from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identification module interface, a universal serial bus interface, and/or the like.

The I2C interface is a two-way synchronization serial bus, and includes one serial data line (serial data line, SDA) and one serial clock line (serial clock line, SCL). In some embodiments, the processor 110 may include a plurality of groups of I2C buses. The processor 110 may be coupled to the touch sensor 180K, the microphone, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device.

In embodiments of this application, the processor 110 may obtain, through the I2C bus interface, a touch operation detected by the touch sensor 180K and performed by the user on an interface, such as a content box-select operation, a touch and hold operation, or a drag operation, to determine a specific intention corresponding to the touch operation, and further respond to the touch operation, such as extracting content on the interface or excerpting content on the interface.

It should be understood that an interface connection relationship between the modules shown in this embodiment of this application is merely a schematic illustration, and does not constitute a limitation on the structure of the electronic device. In some other embodiments of this application, the electronic device may alternatively use an interface connection manner different from that in the foregoing embodiment, or use a combination of a plurality of interface connection manners.

The charging management module 140 is configured to receive a charging input from a charger. The power management module 141 is configured to connect to the battery 142, the charging management module 140, and the processor 110. The power management module 141 receives an input of the battery 142 and/or the charging management module 140, and supplies power to the processor 110, the internal memory 121, an external memory, the display 194, the camera 193, the wireless communication module 163, and the like.

A wireless communication function of the electronic device may be implemented through the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device may be configured to cover one or more communication frequency bands. Different antennas may be further multiplexed to improve antenna utilization. The mobile communication module 150 may provide a wireless communication solution applied to the electronic device and including 2G, 3G, 4G, 5G, or the like.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. The wireless communication module 160 may provide a wireless communication solution applied to the electronic device and including a wireless local area network (wireless local area network, WLAN) (such as a wireless fidelity (wireless fidelity, WI-FI) network), Bluetooth (Bluetooth, BT), a BeiDou navigation satellite system (BeiDou navigation satellite system, BDS), a global navigation satellite system (global navigation satellite system, GNSS), frequency modulation (frequency modulation, FM), a near field communication (near field communication, NFC) technology, an infrared (infrared, IR) technology, or the like.

The electronic device implements a display function through the graphics processing unit (graphics processing unit, GPU), the display 194, the application processor, and the like. The GPU is a microprocessor for image processing and is connected to the display 194 and the application processor. The GPU is configured to perform data and geometric computation for graphic rendering. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light emitting diode, AMOLED), a flexible light-emitting diode (flexible light-emitting diode, FLED), a quantum dot light-emitting diode (quantum dot light emitting diodes, QLED), or the like.

In embodiments of this application, the GPU may be configured to perform interface rendering. The display 194 may be configured to display an interface. For example, the interface may include but is not limited to an application interface (such as a browser interface, an office application interface, a mailbox interface, a news application interface, or a social application interface), a function interface, an applet interface, or the like.

The electronic device may implement a photographing function through the image signal processor (image signal processor, ISP), the camera 193, the video codec, the GPU, the display 194, the application processor, and the like. In this application, the camera 193 may include a front-facing camera and a rear-facing camera of the electronic device, and may be an optical zoom lens or the like. This is not limited in this application.

The external memory interface 120 may be configured to connect to an external memory card, such as a micro SD card, to extend a storage capability of the electronic device. The external memory card communicates with the processor 110 through the external memory interface 120, to implement a data storage function. For example, a file such as audio or a video is stored in the external memory card. In embodiments of this application, the external memory card may be configured to store content extracted by the electronic device from an interface, such as a picture, text, a symbol, a formula, a table, an icon, a figure, a line, a video playing sub-interface, or the like.

The internal memory 121 may be configured to store executable program code of a computer program. For example, the computer program may include an operating system program and an application program. The operating system may include but is not limited to Symbian^{®} (Symbian^{®}), Android^{®} (Android^{®}), Microsoft^{®} Windows^{®}, Apple iOS^{®}, BlackBerry^{®} (BlackBerry^{®}), Harmony^{®} (Harmony^{®}) OS, or the like. The executable program code includes instructions. The processor 110 runs the instructions stored in the internal memory 121, to perform various function applications and data processing of the electronic device. The internal memory 121 may include a program storage area and a data storage area. The program storage area may store an operating system, an application needed by at least one function (for example, a video playing function or an image playing function), and the like. The data storage area may store data created in a process of using the electronic device (for example, content extracted by the electronic device from an interface, such as a picture, text, a symbol, a formula, a table, an icon, a figure, a line, a video playing sub-interface, or the like). In addition, the internal memory 121 may include a high-speed random access memory, or may include a non-volatile memory, for example, at least one magnetic disk storage device, a flash memory, a universal flash storage (universal flash storage, UFS), or the like.

The electronic device may use the audio module 170, the speaker 170A, the receiver 170B, the microphone 170C, the headset jack 170D, the application processor, and the like to implement an audio function, such as audio playing or recording.

The touch sensor 180K is also referred to as a "touch panel". The touch sensor 180K may be disposed on the display 194. The touch sensor 180K and the display 194 constitute a touchscreen, which is also referred to as a "touch screen". The touch sensor 180K is configured to detect a touch operation performed on or near the touch sensor 180K. The touch sensor may transfer the detected touch operation (including information such as a touch position, touch strength, a contact area, and touch duration) to the processor, to determine a touch event type. A visual output related to the touch operation may be provided on the display 194. In some other embodiments, the touch sensor 180K may alternatively be disposed on a surface of the electronic device at a position different from that of the display 194.

In embodiments of this application, the touch operation detected by the touch sensor 180K may be an operation performed by the user on or near the touchscreen through a finger, or may be an operation performed by the user on or near the touchscreen through a touch auxiliary tool such as a stylus, a touch stylus, or a touch ball. This is not limited in this application.

It may be understood that the structure shown in this embodiment of this application does not constitute a specific limitation on the electronic device. In some other embodiments of this application, the electronic device may include more or fewer components than those shown in the figure, have some components combined, have some components split, or have different component arrangements. The components shown in the figure may be implemented by hardware, software, or a combination of software and hardware.

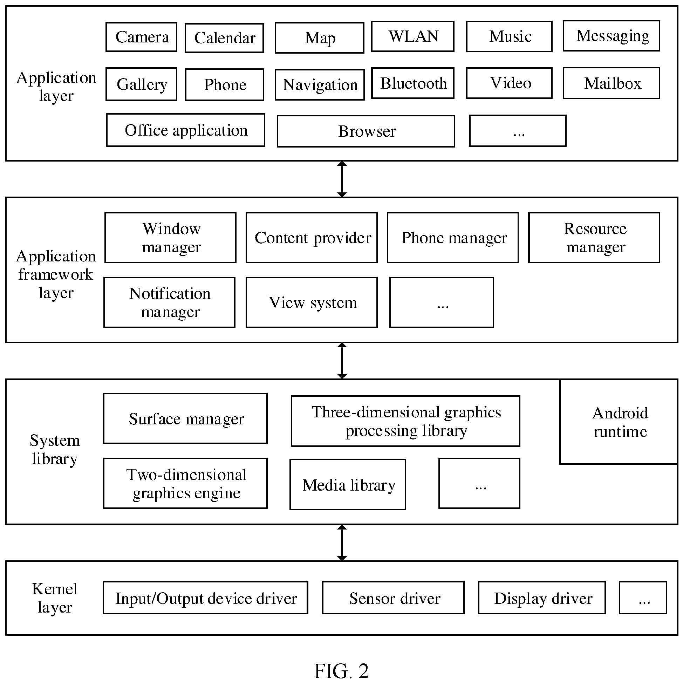

FIG. 2 is a block diagram of a software structure of an electronic device according to an embodiment of this application by using the Android^{®} system as an example. For example, software may be divided into a plurality of layers based on a hierarchical architecture. Each layer has a clear role and division of work. The layers communicate with each other through a software interface. In some embodiments, as shown in FIG. 2, the Android^{®} system may be divided into an application layer, an application framework (Framework) layer, an Android^{®} runtime (Android^{®} runtime) and a system library, and a kernel layer from top to bottom based on the hierarchical architecture.

The application layer may include a series of applications, such as Camera, Gallery, Calendar, Phone, Map, Navigation, WLAN, Bluetooth, Music, Video, Messaging, and the like, as shown in FIG. 2. The applications shown in FIG. 2 are merely used as an example. The applications may alternatively be third-party applications, such as an office application (for example, Office), a mailbox, a browser, and the like. The application framework (Framework) layer is configured to provide an application programming interface (application programming interface, API) and a programming framework for the applications at the application layer. The application framework layer includes some predefined functions. As shown in FIG. 2, the application framework layer may include a window manager, a content provider, a view system, a phone manager, a resource manager, a notification manager, and the like.

The window manager is configured to manage a window program. The window manager may obtain a display size, determine whether there is a status bar, lock a screen, take a screenshot, and the like.

The content provider is configured to store and obtain data, and enable the data to be accessible to an application. The data may include a video, an image, audio, calls that are made and received, a browsing history, a bookmark, a phone book, and the like.

The view system includes a visual control, for example, a text display control or a picture display control. The view system may be configured to build an application interface. A display interface may be composed of one or more views. For example, a display interface including an SMS message notification icon may include a text display view and a picture display view.

The phone manager is configured to provide a communication function of a terminal device, for example, management of a call status (including answering, declining, or the like).

The resource manager provides an application with various resources, such as a localized character string, an icon, a picture, a layout file, and a video file.

The notification manager enables an application to display notification information in a status bar, and may be configured to convey a notification message. The notification message may automatically disappear after the message is displayed for a short period of time, without user interaction. For example, the notification manager is configured to provide a notification of download completion, a message reminder, and the like. The notification manager may alternatively provide a notification in a status bar at the top of the system in a form of a chart or scroll bar text, such as a notification of an application running in the background, or provide a notification on a screen in a form of a dialog window. For example, text information is prompted in the status bar, a prompt tone is made, the electronic device vibrates, or an indicator light blinks.

The Android runtime includes a core library and a virtual machine. The Android^{®} runtime is responsible for scheduling and management of the Android^{®} system.

The core library includes two parts: a functional function that needs to be invoked in the Java language and a core library of Android^{®}.

The system library may include a plurality of functional modules, for example, a surface manager (surface manager), a media library (media library), a three-dimensional graphics processing library (such as OpenGL ES), and a 2D graphics engine (such as SGL).

The surface manager is configured to manage a display subsystem and provide fusion of 2D and 3D layers for a plurality of applications.

The media library supports playback and recording in a plurality of commonly used audio and video formats, static image files, and the like. The media library may support a plurality of audio and video encoding formats, such as MPEG4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between a hardware layer and a software layer. The kernel layer may include a display driver, an input/output device driver (for example, a keyboard driver, a touchscreen driver, a headset driver, a speaker driver, or a microphone driver), a camera driver, an audio driver, a sensor driver, and the like. The user performs an input operation through an input device (such as a touchscreen, a keyboard, or a microphone). The kernel layer may generate a corresponding input event based on the input operation received by the input device.

For example, in some embodiments of this application, the input operation received by the input device may include a tap (for example, single-tap or double-tap) operation, a touch and hold operation, a slide operation, an air gesture operation, or the like performed by the user on the touchscreen through a finger. In some other embodiments of this application, the input operation received by the input device may include a box-select operation, a touch and hold operation, a tap (for example, single-tap or double-tap) operation, a slide operation, a drag operation, or the like performed by the user on the touchscreen through a touch auxiliary tool such as a stylus, a touch stylus, or a touch ball.

In embodiments of this application, the electronic device may provide an excerption function.

In some embodiments of this application, when receiving a preset operation used by the user to trigger picture excerption on an interface (for example, a first interface), the electronic device may recognize an interface region selected by the user and capture the interface region in a picture form. Optionally, when receiving an operation of dragging a captured picture to another interface (for example, a second interface) by the user, the electronic device may further quickly excerpt the captured picture to the another interface (namely, the second interface).

In some other embodiments of this application, when receiving a preset operation used by the user to trigger editable content excerption on an interface (for example, a first interface), the electronic device may recognize an interface region selected by the user and recognize specific content in the interface region. Optionally, when receiving an operation of dragging the recognized content to another interface (for example, a second interface) by the user, the electronic device may further quickly excerpt the recognized content to the another interface (namely, the second interface). The content excerpted to the another interface (namely, the second interface) is content in an editable form.

It should be noted that in embodiments of this application, the interface region selected by the user may include content in any form, for example, one or more of a picture, text, a symbol, a formula, a table, an icon, a figure, a line, a video playing sub-interface, or the like. This is not limited in this application. The electronic device may excerpt content in the interface region selected by the user in the picture form or the editable form based on an actual operation of the user.

It may be understood that based on the content excerption method provided in embodiments of this application, the electronic device can predetermine an excerption intention of the user. In this way, when the user has an excerption requirement, specific content can be recognized and extracted in advance, to provide the user with smoother content excerption experience.

In addition, for some interfaces or files for which the user is not granted specific content extraction permission, for example, a web page that does not support content copying by the user, based on the content excerption method provided in embodiments of this application, the electronic device can successfully excerpt editable content such as text or a table from the interface when the user needs to excerpt the editable content. Further, because the intention is predetermined and the content is recognized in advance, an excerption operation of the user is simplified and excerption efficiency is improved.

In embodiments of this application, an application (including a conventional application, a light application, a quick application, or the like) configured to provide the excerption function may be installed on the electronic device, the electronic device has an entry for accessing an applet configured to provide the excerption function (for example, the applet configured to provide the excerption function is integrated in an application of the electronic device), or a function used to provide the excerption function is integrated in the electronic device. This is not limited in embodiments of this application.

In an example, permission to use the excerption function provided by the electronic device may be granted to a plurality of applications installed on the electronic device, a plurality of applets for which the electronic device has an entry, and a plurality of functions integrated in the electronic device. For example, the permission to use the excerption function provided by the electronic device may be granted to all applications installed on the electronic device, all applets for which the electronic device has an entry, and all functions integrated in the electronic device. For another example, the permission to use the excerption function provided by the electronic device may be granted to one or more of a plurality of applications installed on the electronic device, a plurality of applets for which the electronic device has an entry, and a plurality of functions integrated in the electronic device with user authorization.

In an example, the excerption function provided by the electronic device may support display of an excerption-related shortcut option on the display of the electronic device. The excerption-related shortcut option may include but is not limited to one or more of the following: an excerption disabling option, an excerption option, an excerpted content editing option, a pinning option, a saving option, and a sharing option.

The excerption disabling option is used to disable the excerption function. The excerption option is used to enable the excerption function. The excerpted content editing option is used to modify obtained content in the picture form or the editable form, for example, draw a line on, doodle on, crop, rotate, edit text on (such as covering with a text layer), add a sticker to, add a filter to, adjust a color of, add a border to, and cover with mosaics the obtained picture; or for another example, add/delete content, change a font, change a font size, change a style, and change a color number of the obtained editable content. The pinning option is used to pin (also referred to as "fix") the obtained content or modified content to a specific position on the display. The saving option is used to save the obtained content or modified content in the electronic device, for example, in a default path or a path or directory specified by the user. The sharing option is used to share the obtained content or modified content, for example, to another device in a manner such as but not limited to Bluetooth, WeChat^{®}, or WLAN direct connection; or for another example, to Moments, a transfer station, or the like.

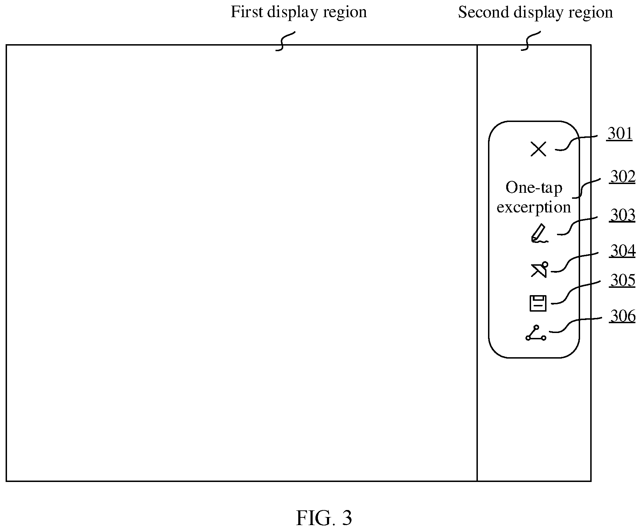

For example, FIG. 3 is a diagram of an interface of an electronic device including an excerption-related shortcut option according to an embodiment of this application. As shown in FIG. 3, an excerption disabling option 301, an excerption option 302 (namely, a virtual one-tap excerption button shown in FIG. 3), an excerpted content editing option 303, a pinning option 304, a saving option 305, and a sharing option 306 are displayed on the electronic device in a floating manner.

Optionally, in some embodiments, the excerption-related shortcut option may not include the excerption disabling option and the excerption option. When an excerption application runs (for example, runs in the foreground or background), the electronic device may automatically enable the excerption function. When the excerption application is closed, the electronic device may automatically disable the excerption function.

In a possible display manner, the excerption-related shortcut option may be displayed in a fixed region of the display of the electronic device, for example, displayed on a right side or an upper side of the display of the electronic device. In the diagram of the interface of the electronic device shown in FIG. 3, the display of the electronic device includes a first display region and a second display region. The excerption-related shortcut options 301 to 306 are displayed in the second display region of the display of the electronic device.

In another possible display manner, the excerption-related shortcut option may be displayed on the display of the electronic device in a floating manner. A specific position of the excerption-related shortcut option on the display of the electronic device is not limited in embodiments of this application.

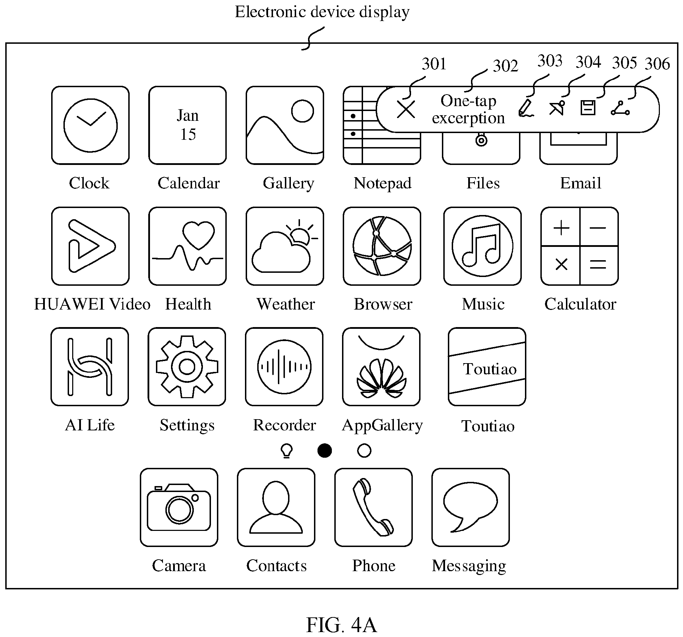

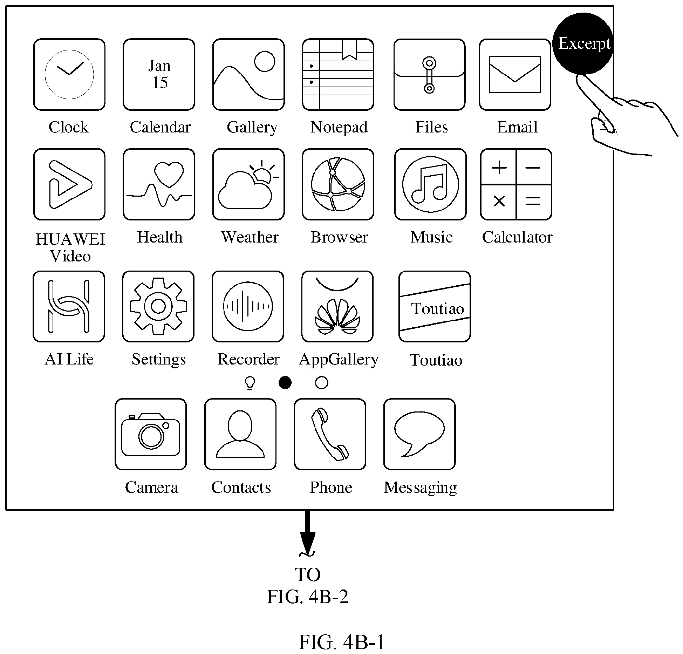

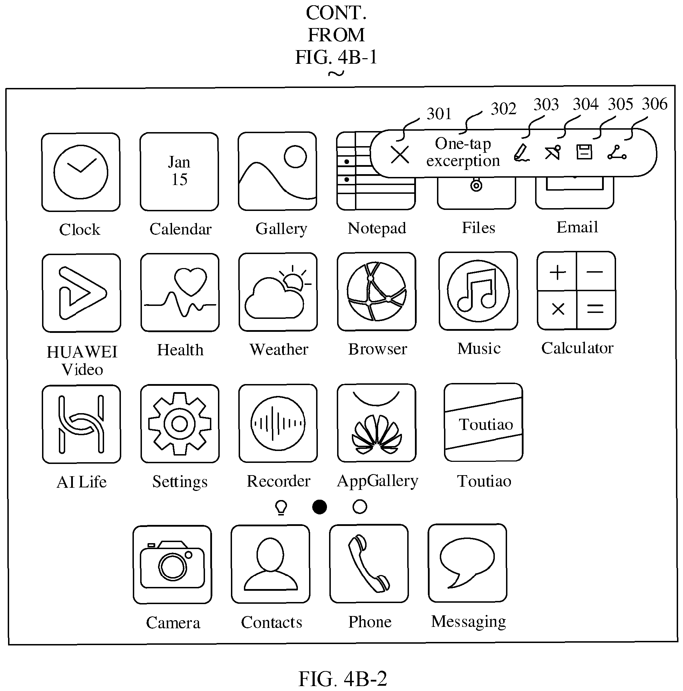

For example, as shown in FIG. 4A, the excerption-related shortcut options 301 to 306 are displayed on an application icon on a desktop of the electronic device in a floating manner in a form of a floating bar.

For another example, to prevent the excerption-related shortcut option from blocking an interface on the display, as shown in FIG. 4B-1 and FIG. 4B-2, the excerption-related shortcut option is displayed on the display of the electronic device in a floating manner in a form of a floating ball. Optionally, in response to an operation of tapping the floating ball by the user, the floating ball may be expanded into a floating bar. The floating bar includes the excerption-related shortcut options 301 to 306. In this way, the user selects an option based on an actual requirement.

Alternatively, the excerption-related shortcut option may be displayed on the display of the electronic device in another form. This is not limited in embodiments of this application.

Optionally, in embodiments of this application, the electronic device may move the excerption-related shortcut option to a corresponding position based on an operation of dragging the excerption-related shortcut option by the user, for example, move the excerption-related shortcut option from a position shown in FIG. 4A or FIG. 4B-1 and FIG. 4B-2 to a lower-right corner or near a right edge of the desktop of the electronic device.

It should be noted that display forms and display positions of the excerption-related shortcut option shown in FIG. 3 and FIG. 4A in this application are merely used as examples, and are not specifically limited. In addition, regardless of the display form and display position of the excerption-related shortcut option displayed on the display of the electronic device, the supported excerption function is applicable to obtaining and excerpting content in any interface region on the display.

The following specifically describes the content excerption method provided in embodiments of this application by using an example in which the electronic device excerpts content on the first interface to the second interface.

The first interface and the second interface may be but are not limited to an application interface, a function interface, an applet interface, or the like. For example, the application interface is an interface of a native application (such as Gallery, Messaging, Notepad, or Weather) integrated in a native operating system or a third-party application (such as WeChat^{®}, Toutiao, Weibo^{®}, Xiaohongshu^{®}, a mailbox, a browser, Office, or a journal application) downloaded and installed from an application store or another channel. For example, the function interface is a setting function interface or the like. The applet interface may be an interface of an applet integrated in an application, such as a reading applet, an office applet, or a journal applet integrated in WeChat^{®}. Specific types, functions, and the like of the first interface and the second interface are not limited in embodiments of this application.

For example, a relationship between the first interface and the second interface may include but is not limited to any one of (1) to (4) below:
(1) The first interface and the second interface are interfaces of different types.

In an example, the first interface is an interface of an applet A and the second interface is an interface of an application B. The first interface and the second interface are displayed on the display of the electronic device in a split-screen manner.

For example, the first interface is an interface of the reading applet and the second interface is an interface of Notepad. Based on the content excerption method provided in embodiments of this application, content selected by the user on an interface of a type (for example, an applet) can be excerpted to an interface of another type (for example, an application) across interface types.

(2) The first interface and the second interface are interfaces of a same type (for example, an application, a function, an applet, or the like). The first interface and the second interface are interfaces of different applications, functions, applets, or the like.

In an example, the first interface is an interface of a first application and the second interface is an interface of a second application. The first interface and the second interface are displayed on the display of the electronic device in a split-screen manner.

For example, the first interface is an interface of Toutiao and the second interface is an interface of Notepad. Based on the content excerption method provided in embodiments of this application, content selected by the user on an interface of an application can be excerpted to an interface of another application across applications. Interface excerption across functions or applets is similar.

(3) The first interface and the second interface are interfaces of a same application, function, applet, or the like. The first interface is different from the second interface.

In an example, the first interface is an interface A of an application A and the second interface is an interface B of the application A.

For example, the first interface is a Favorites interface of WeChat^{®} and the second interface is a Moments editing interface of WeChat^{®}. The first interface and the second interface are displayed on the display of the electronic device in a split-screen manner.

For another example, the first interface includes a scroll bar. The first interface is an interface of Notepad A displayed when the scroll bar is located at a first position. The second interface is an interface of Notepad A displayed when the scroll bar is located at a second position. The first position is different from the second position.

For another example, when a document A is displayed in two columns, the first interface is one column of the document A and the second interface is the other column of the document A.

When the first interface and the second interface are different interfaces of a same application, based on the content excerption method provided in embodiments of this application, content selected by the user on an interface of the application can be excerpted to another interface of the application.

(4) The first interface is the same as the second interface.

For example, the first interface and the second interface are parallel view interfaces.

For another example, both the first interface and the second interface are page 3 of a document A. Based on the content excerption method provided in embodiments of this application, content selected by the user at a first position on the first interface (namely, the second interface) can be excerpted to a second position on the first interface (namely, the second interface).

When the first interface is the same as the second interface, based on the content excerption method provided in embodiments of this application, content selected by the user at a first position on an application interface can be excerpted to another position on the application interface.

For example, the excerption-related shortcut options 301 to 306 are displayed on the display of the electronic device in a floating manner, the first interface is an interface of Toutiao (namely, the first application), and the second interface is an interface of Notepad (namely, the second application). As shown in FIG. 5A and FIG. 5B, in response to receiving an operation 502 of opening Toutiao by the user on an interface 501, the electronic device starts Toutiao and displays an interface 503. The interface 503 includes an interface 504 of Toutiao. The interface 503 also includes a screen splitting option 505.

Further, as shown in FIG. 6A and FIG. 6B, in response to receiving an operation of selecting the screen splitting option 505 by the user on the interface 503, the electronic device displays an interface 506. The interface 506 includes a plurality of application icons. In response to an operation 507 of opening Notepad (namely, the second application) on the interface 506 by the user, the electronic device displays an interface 700 shown in FIG. 7. The interface 700 includes the interface (namely, the first interface) of Toutiao (namely, the first application) and the interface (namely, the second interface) of Notepad displayed on left and right screens.

In the foregoing process shown in FIG. 5A to FIG. 7, the excerption-related shortcut options 301 to 306 are always displayed on the display of the electronic device in a floating manner.

It should be noted that the relationships between the first interface and the second interface described in (1) to (4) above are merely used as several examples. The relationship between the first interface and the second interface may alternatively include another case. This is not specifically limited in embodiments of this application.

In addition, in embodiments of this application, the first interface and the second interface may be displayed on the display of the electronic device in full windows in a split-screen manner, as shown in FIG. 7. Optionally, the first interface and the second interface may alternatively be displayed on the display of the electronic device in a form of small windows, as shown in FIG. 8. This is not limited in embodiments of this application.

The following specifically describes, with reference to specific embodiments, a content excerption method provided in embodiments of this application.

As shown in FIG. 9, a content excerption method provided in embodiments of this application may include S901 and S902.

S901: An electronic device enters an excerption state.

The electronic device may enter the excerption state after an excerption function is enabled.

In a possible case, the electronic device may enter the excerption state after running (including running in the foreground or running in the background) an excerption application.

In another possible case, the excerption application may further have an option for enabling or disabling the excerption function. The electronic device may enter the excerption state after the excerption application is started and the electronic device receives a user's operation of selecting the option for enabling the excerption function.

For example, the excerption function provided by the electronic device supports display of an excerption-related shortcut option on a display of the electronic device, and the excerption-related shortcut option includes the virtual one-tap excerption button shown in any one of FIG. 3 to FIG. 8. As shown in FIG. 10A and FIG. 10B, after receiving an operation 1001 of tapping the virtual one-tap excerption button by the user, the electronic device enters the excerption state.

Optionally, after the electronic device enters the excerption state, the electronic device may further display prompt information 1002 shown in FIG. 10B, to prompt the user to select to-be-excerpted content.

Optionally, after the electronic device enters the excerption state, the electronic device may exit the excerption state at any time based on an instruction of the user. For example, after receiving the user's operation of tapping the excerption disabling option shown in any one of FIG. 3 to FIG. 8, the electronic device disables the excerption function and exits the excerption state.

S902: The electronic device receives a first operation used to represent an intention of the user to excerpt content on a first interface.

The first operation may be a preset operation used to trigger a form of content excerption. For example, the first operation may include but is not limited to a tap (for example, single-tap or double-tap) operation, a double-tap operation, a touch and hold operation, a box-select operation, a slide operation, a preset gesture operation, a voice operation, a preset physical button pressing operation, an operation of selecting a virtual option (for example, a picture excerption option or an editable text excerption option), or the like. This is not limited in this application.

In some embodiments, the first operation is an operation performed by the user on the first interface through a touch auxiliary tool such as a stylus, a touch stylus, or a touch ball. For example, the first operation may be a tap (for example, single-tap or double-tap) operation, a double-tap operation, a touch and hold operation, a box-select operation, a slide operation, a preset gesture operation, or the like performed by the user on the first interface through the touch auxiliary tool.

It may be understood that if the first operation is an operation input by the user through a finger, the operation is usually transparently transmitted to an application (namely, an application to which the first interface belongs) corresponding to an interface on which the operation is performed, and the application determines an input event and responds to the event. However, if the first operation is an operation input by the user through the touch auxiliary tool, a preset layer (for example, an excerption layer) on an application layer hooks (hook) or intercepts the operation to the excerption application. Therefore, the application to which the first interface belongs does not sense the first operation. Based on this, in embodiments of this application, the user may input the first operation on the first interface through the touch auxiliary tool, so that the electronic device can accurately determine the input event corresponding to the first operation.

In an example, a special event may be preset in the excerption application. The event corresponds to the first operation input by the user on the first interface through the touch auxiliary tool and received by the electronic device. For example, the special event may be FLAG_ONLY_ALLOW_STYLUS_EVENT. If the electronic device receives the special event, the excerption layer on the application layer hooks (hook) or intercepts the special operation to the excerption application, and subsequent excerption-related processing is performed. An application corresponding to the application layer does not respond to the event. In addition, processing performed by the excerption application on the first operation does not affect processing performed by another application (for example, the application to which the first interface belongs) on another conventional operation performed by the user on the first interface through a finger, such as a scroll bar scrolling operation, an interface switching operation, an application switching operation, or an application closing operation.

Optionally, for an event other than FLAG_ONLY_ALLOW_STYLUS_EVENT, for example, the user performs a scroll bar scrolling operation, an interface switching operation, an application switching operation, an application closing operation, or the like on the first interface through a finger, in some embodiments, to further ensure that an application corresponding to an application layer has permission to respond to the event, the excerption application may further check one or more of whether a current status is the excerption state, whether a window attribute corresponding to the application layer includes a preset attribute, or whether the application corresponding to the application layer has permission to process the event.

In an example, FIG. 11 is a diagram of a process of processing an input event at an excerption layer according to an embodiment of this application. As shown in FIG. 11, when receiving an operation of a user, an electronic device may first check a current status (calculateSkipFlag) of the electronic device, for example, check whether an upper preset layer has a SkipFlag flag. If the electronic device is currently in an excerption state, the electronic device further determines whether the received operation is a stylus event.

Further, if the received operation is a stylus event, an excerption application on the electronic device responds to the received operation. Alternatively, if the received operation is not a stylus event, the electronic device checks whether the electronic device is currently in the excerption state. If the electronic device determines that the electronic device is currently in the excerption state, the electronic device further checks whether a window attribute corresponding to an application layer includes a preset attribute. If the window attribute corresponding to the application layer includes the preset attribute, the electronic device further checks whether an application corresponding to the application layer has permission to process the event. If the application corresponding to the application layer has the permission to process the event, the excerption application on the electronic device further delivers the event to the application corresponding to the application layer for processing.

Based on the foregoing input event processing procedure, it can be ensured that an excerption-related process is not interrupted by another application process, and the excerption-related process does not interrupt another application process. This ensures diversified operations of the user on a display, to meet diversified display requirements of the user and a requirement of parallel working of an excerption function and another layer function. In addition, based on the foregoing input event processing procedure, it can be ensured that the electronic device supports continual excerption in the excerption state.

It should be noted that the first operation is not limited to the operation input by the user through the touch auxiliary tool such as the stylus, the touch stylus, or the touch ball in this application.

In some other embodiments, the first operation may be an operation performed by the user on the first interface through a finger. The first operation is a preset excerption-related operation received when the electronic device is in the excerption state. For example, the first operation may be a tap (for example, single-tap or double-tap) operation, a double-tap operation, a touch and hold operation, a box-select operation, a slide operation, a preset gesture operation, or the like performed by the user on the first interface through a finger.

It may be understood that because the first operation performed by the user on the first interface through the finger is the preset excerption-related operation received when the electronic device is in the excerption state, the electronic device may determine, based on the preset excerption-related operation, that the excerption application is responsible for an excerption-related event corresponding to the operation, and notify the excerption application to respond to the event.

In an example, the user may trigger excerption of content in a picture form through a box-select operation and excerption of content in an editable form through a touch and hold operation.

It should be noted that whether the user is granted permission to obtain a picture (for example, save a picture) or permission to obtain (for example, copy or cut) editable content on the first interface is not limited in embodiments of this application. The content excerption method provided in embodiments of this application can be applied to both an interface on which the user is granted permission to obtain a picture and/or permission to obtain editable content and an interface on which the user is not granted permission to obtain a picture and/or permission to obtain editable content.

Further, if the first operation is used to represent an intention of the user to excerpt the content in the picture form, the electronic device performs S903-1.

S903-1: The electronic device recognizes an interface region selected by the user on the first interface and captures the interface region in the picture form.

The interface region selected by the user on the first interface may include but is not limited to one or more of a picture, text, a symbol, a formula, a table, an icon, a figure, a line, a video playing sub-interface, or the like. After receiving the first operation used to represent the intention of the user to excerpt the content in the picture form, the electronic device may capture, in the picture form, the interface region including one or more of the foregoing types of content.

In some embodiments, after the electronic device enters the excerption state, the user may select a to-be-excerpted content region on the first interface. In this case, after receiving an operation of selecting an interface region on the first interface by the user, the electronic device may recognize the interface region and capture the interface region in the picture form.

Preferably, to simplify an operation of the user and provide the electronic device with more sufficient time for early recognition, so that the electronic device can respond to an excerption intention of the user more quickly, the first operation used to represent the intention of the user to excerpt the content in the picture form may be further used to select the interface region. For example, the first operation may be a box-select operation 1201 input by the user through a stylus in FIG. 12A to FIG. 12C. The user obtains a closed figure through the box-select operation, for example, an approximate square or an approximate circle.

For example, the first operation is the operation of selecting the interface region on the first interface by the user, and the first operation is a box-select operation. S903-1 may specifically include: The electronic device recognizes the interface region corresponding to the first operation on the first interface, and captures the interface region in the picture form.

For example, the first operation is the box-select operation 1201 input by the user through the stylus in FIG. 12A to FIG. 12C. As shown in FIG. 12A to FIG. 12C, the electronic device recognizes, based on the operation 1201 of box-selecting an interface region on the first interface by the user, the interface region box-selected by the user, and captures the interface region in the picture form. The interface region box-selected by the user shown in FIG. 12A to FIG. 12C includes a picture and text.

It should be noted that when the user inputs a box-select operation on a touchscreen through the touch auxiliary tool such as the stylus, the touch stylus, or the touch ball, a figure box-selected by the user is usually a non-standard closed figure, for example, an approximate square or an approximate circle. To obtain a picture that is more aesthetic and easy to arrange, in embodiments of this application, the electronic device may adaptively optimize an interface region corresponding to the box-select operation.

As shown in FIG. 13A to FIG. 13C, the electronic device may adaptively optimize an interface region corresponding to a box-select operation 1301 input by the user through the stylus, to obtain an optimized interface region 1302.

For another example, FIG. 14 is a diagram of three types of interface region adaptive optimization according to an embodiment of this application.

In particular, because accuracy is difficult to control when the user performs an operation through the touch auxiliary tool, a part that is of an interface region and that includes important information may be missed out. In this case, the electronic device may adaptively optimize an interface region corresponding to a box-select operation, to ensure integrity of excerpted information.

In a possible implementation, the electronic device may adaptively optimize the interface region corresponding to the box-select operation with reference to the interface region corresponding to the non-standard closed figure input by the user and specific content within a preset range (for example, 5 millimeters) inside and outside the interface region. For example, as shown in FIG. 13A to FIG. 13C, text "class" is located outside the interface region corresponding to the box-select operation 1301 input by the user through the stylus. When adaptively optimizing the interface region, the electronic device considers that a distance between the text "class" and the interface region corresponding to the box-select operation 1301 is less than a preset distance, so that the text "class" is located inside the optimized interface region 1302.

If the first operation is used to represent an intention of the user to excerpt the content in the editable form, the electronic device performs S903-2 and S903-3.

S903-2: The electronic device recognizes content in an interface region selected by the user on the first interface.

The interface region selected by the user on the first interface may include one or more of text, a symbol, a formula, a table, or the like. Optionally, the interface region selected by the user on the first interface may further include one or more of a picture, an icon, a figure, a line, a video playing sub-interface, or the like. After receiving the first operation used to represent the intention of the user to excerpt the content in the editable form, the electronic device may capture, in the editable form, the interface region including one or more of the foregoing types of content.

It should be noted that a form in which the content in the interface region selected by the user on the first interface is displayed on the first interface is not limited in embodiments of this application. For example, the content may be displayed on the first interface in the editable form, or may be displayed on the first interface in an uneditable form.

In some embodiments, after the electronic device enters the excerption state, the user may select a to-be-excerpted content region on the first interface. In this case, after receiving an operation of selecting an interface region on the first interface by the user, the electronic device may recognize the interface region.

Preferably, to simplify an operation of the user and provide the electronic device with more sufficient time for early recognition, so that the electronic device can respond to an excerption intention of the user more quickly, the first operation used to represent the intention of the user to excerpt the content in the picture form may be further used to enable an interface region selection state.

For example, the first operation may be a touch and hold operation 1501 input by the user through a stylus in FIG. 15A to FIG. 15D. After receiving the touch and hold operation 1501 shown in FIG. 15A to FIG. 15D, the electronic device enables the interface region selection state and displays a content selection start cursor 1502.

S903-3: The electronic device extracts, in the editable form, the content in the interface region selected by the user on the first interface.

For example, as shown in FIG. 15A to FIG. 15D, after receiving an operation 1503 of moving a position of the start cursor 1502 (namely, the operation of selecting the interface region on the first interface) by the user, the electronic device recognizes an interface region corresponding to the operation, and then recognizes content in the interface region corresponding to the operation.

Further, when receiving an operation of excerpting captured or extracted excerptible content to another interface (for example, the second interface) by the user, the electronic device may quickly excerpt the captured or extracted excerptible content to the another interface (namely, the second interface).

As shown in FIG. 9, if the first operation is used to represent the intention of the user to excerpt the content in the picture form, the content excerption method provided in embodiments of this application may further include S904-1. If the first operation is used to represent the intention of the user to excerpt the content in the editable form, the content excerption method provided in embodiments of this application may further include S904-2.

In some embodiments, if the content is displayed on the first interface in the editable form, the electronic device may extract, in the editable form through copying or cutting, the content in the interface region selected by the user on the first interface. Alternatively, the electronic device may perform, by using a text detection algorithm, text feature detection on the interface region selected by the user on the first interface.

In some other embodiments, if the content is displayed on the first interface in the uneditable form, the electronic device may perform, by using a text detection algorithm, text feature detection on the interface region selected by the user on the first interface.

For example, the text detection algorithm may be specifically an optical character recognition (optical character recognition, OCR) algorithm, a text detection algorithm based on a computer gradient and a dilation and erosion operations, a text detection algorithm based on deep learning (for example, based on a convolutional neural network), or the like. This is not limited in embodiments of this application.

S904-1: The electronic device excerpts, to the second interface in response to the operation of excerpting the excerptible content to the second interface, a picture captured on the first interface.

In an example, the operation of excerpting the excerptible content to the second interface may be an operation of dragging the excerptible content from the first interface to a target position on the second interface by the user.

As shown in FIG. 12A to FIG. 12C, in response to receiving an operation 1202 of dragging, from the first interface to the target position on the second interface by the user, content captured on the first interface in the picture form, the electronic device excerpts (for example, copies or cuts) the captured picture to the target position on the second interface.

As shown in FIG. 13A to FIG. 13C, in response to receiving an operation 1303 of dragging, from the first interface to the target position on the second interface by the user, content that is in the interface region 1302 and that is captured on the first interface in the picture form, the electronic device excerpts (for example, copies or cuts) the captured picture to the target position on the second interface.

S904-2: The electronic device excerpts, to the second interface in response to the operation of excerpting the excerptible content to the second interface, editable content extracted on the first interface.

In an example, the operation of excerpting the excerptible content to the second interface may be an operation of dragging the excerptible content from the first interface to a target position on the second interface by the user.

As shown in FIG. 15A to FIG. 15D, in response to receiving an operation 1504 of dragging, from the first interface to the target position on the second interface by the user, text captured on the first interface in the editable form, the electronic device excerpts (for example, copies or cuts) the captured text in the editable form to the target position on the second interface.

It should be noted that a flowchart shown in FIG. 9 is an example in which the first interface includes content (for example, one or more of text, a symbol, a formula, a table, or the like) that can be extracted in the editable form. In some embodiments, if the electronic device recognizes that the content in the interface region selected by the user on the first interface cannot be extracted in the editable form, the electronic device may capture the interface region in the picture form. As shown in FIG. 16, if the first interface does not include the content that can be extracted in the editable form, the electronic device performs S903-1, that is, recognizes the interface region selected by the user on the first interface, and captures the interface region in the picture form. Further, the electronic device may excerpt, to the second interface in response to the operation of excerpting the excerptible content to the second interface, the picture captured on the first interface (that is, perform S904-1).

It may be understood that based on the content excerption method provided in embodiments of this application, the electronic device can predetermine an excerption intention of the user based on an operation used to represent an intention of the user to excerpt content on an interface. In this way, when the user has an editable content excerption requirement, an interface region can be recognized and content in the interface region can be recognized and obtained in advance, to provide the user with smoother content excerption experience. For example, if an operation intention of the user is excerpting content on an interface in the picture form, the electronic device may recognize an interface region and content in the interface region and obtain a picture in advance, to directly excerpt the obtained picture to a target position on a target interface when the user triggers an excerption operation. For another example, if an operation intention of the user is excerpting content on an interface in the editable form, the electronic device may recognize an interface region and content in the interface region and extract editable content in advance, to directly excerpt the obtained editable content to a target position on a target interface when the user triggers an excerption operation.

As we know, when excerpting content, the user usually needs to excerpt content in a plurality of interface regions for a plurality of times. To simplify an operation of the user, improve excerption efficiency, and provide the user with more convenient excerption experience, the electronic device may remain in the excerption state after entering the excerption state, so that the user can perform continual excerption until the user disables the excerption function (for example, the user taps the excerption disabling option in the excerption-related shortcut option).

To enable the electronic device to remain in the excerption state after the excerption state is entered, to support continual excerption, in embodiments of this application, the excerption-related process is not interrupted by another application process after the excerption state is entered. For example, the excerption-related process is not interrupted by an application process such as a related process of an operation of switching an application interface by the user, a related process of opening an application by the user, or a related process of an operation of selecting an interface region by the user. Similarly, after the excerption state is entered, the excerption-related process does not interrupt another application process. For example, the user may further perform an operation (such as sliding an interface or opening a sub-interface) on an application interface, switch an application interface, open an application interface, or the like.

Optionally, when continual excerption is performed, source interfaces (namely, the first interface from which content is excerpted) corresponding to a plurality of excerption times may include the following cases (1) to (4):
(1) When continual excerption is performed, the source interfaces corresponding to the plurality of excerption times belong to a same application and are the same, and interface regions selected by the user are the same.
   For example, as shown in FIG. 17, both interface regions selected by the user in first excerption and second excerption are a same interface region on a first application interface 1-1. After text is excerpted from the first application interface 1-1 to a second application interface 2-1 in the first excerption, the electronic device recognizes and extracts, in response to an operation of reselecting the same text by the user, the text selected by the user. Further, the electronic device excerpts the extracted text to another position on the second application interface 2-1 in response to an operation of dragging the text to the another position on the second application interface 2-1.
(2) When continual excerption is performed, the source interfaces corresponding to the plurality of excerption times belong to a same application and are the same, and interface regions selected by the user are different.
   For example, as shown in FIG. 18, interface regions selected by the user in first excerption and second excerption are different interface regions on a first application interface 1-1. After text is excerpted from the first application interface 1-1 to a second application interface 2-1 in the first excerption, the electronic device recognizes and captures, in the picture form in response to an operation of sliding the second application interface 2-1 and box-selecting an interface region by the user, the interface region box-selected by the user. Further, the electronic device excerpts a captured picture to another position on the second application interface 2-1 in response to an operation of dragging the picture to the another position on the second application interface 2-1.
(3) When continual excerption is performed, the source interfaces corresponding to the plurality of excerption times belong to a same application and are different.
   For example, as shown in FIG. 19, an interface region selected by the user in first excerption is an interface region on a first application interface 1-1, and an interface region selected by the user in second excerption is an interface region on a first application interface 1-2. After text is excerpted from the first application interface 1-1 to a second application interface 2-1 in the first excerption, the electronic device opens the first application interface 1-2 in response to an operation of opening the first application interface 1-2 by the user (optionally, which may alternatively be an operation of placing the first application interface 1-2 above the first application interface 1-1). In response to an operation of selecting text on the first application interface 1-2 by the user, the electronic device recognizes and extracts the text selected by the user. Further, the electronic device excerpts the extracted text to another position on the second application interface 2-1 in response to an operation of dragging the text to the another position on the second application interface 2-1.
(4) When continual excerption is performed, the source interfaces corresponding to the plurality of excerption times belong to different applications.

For example, as shown in FIG. 20, an interface region selected by the user in first excerption is an interface region on a first application interface 1-1, and an interface region selected by the user in second excerption is an interface region on a third application interface 3-1. After text is excerpted from the first application interface 1-1 to a second application interface 2-1 in the first excerption, the electronic device opens the third application interface 3-1 in response to an operation of opening the third application interface 3-1 by the user (optionally, which may alternatively be an operation of placing the third application interface 3-1 above the first application interface 1-1). In response to an operation of selecting text on the third application interface 3-1 by the user, the electronic device recognizes and extracts the text selected by the user. Further, the electronic device excerpts the extracted text to another position on the second application interface 2-1 in response to an operation of dragging the text to the another position on the second application interface 2-1.

Likewise, optionally, when continual excerption is performed, target interfaces (namely, the second interface to which content is excerpted) corresponding to the plurality of excerption times include the following cases (A) to (C):
(A) When continual excerption is performed, the target interfaces corresponding to the plurality of excerption times belong to a same application and are the same.
   For example, as shown in FIG. 17 to FIG. 20, target interfaces in first excerption and second excerption are both the second application interface 2-1.
(B) When continual excerption is performed, the target interfaces corresponding to the plurality of excerption times belong to a same application and are different.
   For example, as shown in FIG. 21, a target interface in first excerption is the second application interface 2-1, and a target interface in second excerption is a second application interface 2-2.
(C) When continual excerption is performed, the target interfaces corresponding to the plurality of excerption times belong to different applications.

For example, as shown in FIG. 22, a target interface in first excerption is the second application interface 2-1, and a target interface in second excerption is a fourth application interface 4-1.

In embodiments of this application, when continual excerption is performed, a combination of the first interface and the second interface may be any combination of the foregoing cases (1) to (4) and (A) to (C).

In particular, in embodiments of this application, after performing continual excerption based on the method shown in FIG. 9 or FIG. 16, the electronic device may further perform second excerption based on an operation of the user, for example, excerpt content from the second interface to the first interface, as shown in FIG. 23. A relationship between the first interface and the second interface may meet any one of the foregoing possibilities (1) to (4).

Optionally, after performing continual excerption based on the method shown in FIG. 9 or FIG. 16, the electronic device may further perform second excerption based on an operation of the user, for example, excerpt content from the second interface to a third interface, as shown in FIG. 24. A relationship between the second interface and the third interface may meet any one of the foregoing possibilities (A) to (C).

Optionally, when continual excerption is performed, excerption forms corresponding to the plurality of excerption times may be the same or different. For example, continual excerption includes excerption performed twice. The first excerption may be content excerption in the picture form, and the second excerption may be content excerption in the editable form. Alternatively, the first excerption may be content excerption in the editable form, and the second excerption may be content excerption in the picture form. Alternatively, both the first excerption and the second excerption are content excerption in the editable form. Alternatively, both the first excerption and the second excerption are excerption in the picture form.

It may be understood that based on the content excerption method provided in embodiments of this application, the electronic device may remain in the excerption state after entering the excerption state, so that the user can perform continual excerption. For example, the user may continue to be in the excerption state after finishing excerpting content from the first interface to the second interface, so that when the user has a requirement, the user continues to excerpt content from the first interface to the second interface, excerpt content from the second interface to the first interface, open the third interface and excerpt content from the first interface to the third interface, open the third interface and excerpt content from the third interface to the first interface, open the third interface and excerpt content from the second interface to the third interface, open the third interface and excerpt content from the third interface to the second interface, or the like. The method not only can meet a requirement of the user for a plurality of times of continual excerption, but also can simplify an operation of the user, improve excerption efficiency, and provide the user with more convenient excerption experience.

It should be noted that an example in which after the excerptible content (for example, a picture or editable content) is obtained from the first interface, the electronic device directly excerpts the excerptible content to the second interface based on the operation of excerpting the excerptible content to the second interface by the user is used in the foregoing embodiments of this application.

Optionally, in some other embodiments, after obtaining the excerptible content from the first interface, the electronic device may further save the obtained excerptible content in the electronic device based on a saving operation of the user (such as tapping a saving option (for example, the saving option 305 shown in FIG. 3) in the excerption-related shortcut option by the user). Further, optionally, the electronic device may further import, to the second interface based on an import operation of the user, the excerptible content from content stored in the electronic device.

As shown in FIG. 25, after the electronic device recognizes and obtains, based on a box-select operation of the user, an interface region corresponding to the box-select operation, the electronic device displays, in response to an operation of tapping a saving option by the user, a path selection interface for the user to select a path to save a captured picture. Further, after receiving an operation of selecting a path (for example, a path 1 shown in FIG. 25) by the user, the electronic device saves the captured picture to the path 1 in response to the operation. Optionally, after the electronic device saves the captured picture to the path 1, the electronic device may display prompt information "Saved" shown in FIG. 25, to prompt the user that the captured picture is saved to the path 1.

Optionally, in some other embodiments, after obtaining the excerptible content from the first interface, the electronic device may further share the obtained excerptible content based on a sharing operation of the user (such as tapping a sharing option (for example, the sharing option 306 shown in FIG. 3) in the excerption-related shortcut option by the user). For example, the sharing operation of the user is an operation of sharing the excerptible content to a transfer station, an operation of sharing the excerptible content to Moments, or the like.

As shown in FIG. 26, after the electronic device recognizes and obtains, based on a box-select operation of the user, an interface region corresponding to the box-select operation, the electronic device displays, in response to an operation of tapping a sharing option by the user, a sharing option interface for the user to select a sharing object option. The sharing object option includes a transfer station option. Further, after receiving an operation of selecting the transfer station option by the user, the electronic device shares a captured picture to the transfer station in response to the operation. Optionally, after the electronic device shares the captured picture to the transfer station, the electronic device may display prompt information "Shared" shown in FIG. 26, to prompt the user that the captured picture is successfully shared to the transfer station.

Optionally, in some other embodiments, after obtaining the excerptible content from the first interface, the electronic device may further pin (also referred to as "fix") the obtained excerptible content at a position on a display of the electronic device based on an operation of pining the obtained excerptible content to the display by the user (such as tapping a pinning option (for example, the pinning option 304 shown in FIG. 3) in the excerption-related shortcut option by the user). Further, optionally, after opening the second interface, the electronic device may further excerpt, to the second interface based on a dragging operation of the user, the excerptible content pinned on the display of the electronic device.

As shown in FIG. 27, after the electronic device recognizes and obtains, based on a box-select operation of the user, an interface region corresponding to the box-select operation, the electronic device enables a pinning mode in response to an operation of tapping a pinning option by the user. In the pinning mode, the electronic device pins (also referred to as "fixes") a captured picture to a lower-left corner of the display of the electronic device in response to an operation of dragging the captured picture to the lower-left corner of the display by the user.

Optionally, in some other embodiments, after obtaining the excerptible content from the first interface, the electronic device may further display, based on an operation of enabling an excerpted content editing function by the user (such as tapping an excerpted content editing option (for example, the excerpted content editing option 303 shown in FIG. 3) in the excerption-related shortcut option by the user), a modification interface for the user to modify the excerptible content. Further, optionally, after the modification to the excerptible content is completed, the electronic device may further display modified content in a corresponding interface region on the first interface (for example, at an upper layer in the corresponding interface region on the first interface).

In embodiments of this application, the modification made by the user to the excerptible content is, for example, drawing a line, doodling, cropping, rotation, editing text (for example, covering with a text layer), adding a sticker, adding a filter, adjusting a color, adding a border, covering with mosaics, or the like on an obtained picture; or for another example, adding/deleting content, changing a font, changing a font size, changing a style, changing a color number, or the like on obtained editable content. This is not limited in embodiments of this application.

As shown in FIG. 28, after the electronic device recognizes and obtains, based on a box-select operation of the user, an interface region corresponding to the box-select operation, the electronic device displays, in response to an operation of tapping an excerpted content editing option by the user, a modification interface for the user to modify an obtained picture. After the user modifies the obtained picture (as shown in FIG. 28, the user doodles on the obtained picture), the electronic device displays modified content in a corresponding interface region on the first interface.

Further, optionally, after the modification to the excerptible content is completed, the electronic device may further excerpt the modified content to the second interface based on a dragging operation of the user. Alternatively, optionally, after the modification to the excerptible content is completed, the electronic device may further save the modified content in the electronic device based on a saving operation of the user. Alternatively, optionally, after the modification to the excerptible content is completed, the electronic device may further share the modified content based on a sharing operation of the user. Alternatively, optionally, after the modification to the excerptible content is completed, the electronic device may further pin the modified content to a position on the display of the electronic device based on an operation of pinning the modified content to the display of the electronic device by the user.

It should be noted that the excerptible content that is an obtained picture is merely used as an example in FIG. 25 to FIG. 28 of this application. In embodiments of this application, the foregoing function such as saving, sharing, editing, pinning, or the like is also applicable to the excerptible content that is obtained content in the editable form. Details are not described herein.

It may be understood that through the content excerption method provided in embodiments of this application, the electronic device can predetermine an excerption intention of the user based on an operation used to represent an intention of the user to excerpt content on an interface. In this way, when the user has an editable content excerption requirement, an interface region can be recognized and content in the interface region can be recognized and obtained in advance, to provide the user with smoother content excerption experience. Further, the electronic device can also provide the user with diversified functions, such as saving, sharing, editing, pinning, or the like, to meet an excerption requirement of the user in a learning or working scenario such as taking a note, making a book excerpt, citing content, or sharing content.

It should be understood that solutions in embodiments of this application may be properly combined and used, and explanations or descriptions of terms appearing in the embodiments may be mutually referenced or interpreted in the embodiments. This is not limited herein.

It should be further understood that sequence numbers of the foregoing processes do not mean execution sequences in embodiments of this application. The execution sequences of the processes should be determined based on functions and internal logic of the processes, and should not be construed as any limitation on the implementation processes of embodiments of this application.

It may be understood that to implement functions of any one of the foregoing embodiments, the electronic device includes a corresponding hardware structure and/or software module for performing each function. A person skilled in the art should be easily aware that with reference to units and algorithm steps in the examples described in embodiments disclosed in this specification, this application can be implemented in a form of hardware or a combination of hardware and computer software. Whether a function is performed by hardware or hardware driven by computer software depends on particular applications and design constraints of the technical solutions. A skilled person may use different methods to implement the described functions for each particular application, but it should not be considered that the implementation goes beyond the scope of this application.

In embodiments of this application, the electronic device may be divided into functional modules. For example, each functional module corresponding to each function may be obtained through division, or two or more functions may be integrated into one processing module. The integrated module may be implemented in a form of hardware, or may be implemented in a form of a software functional module. It should be noted that in embodiments of this application, division into the modules is an example, and is merely logical function division. In actual implementation, another division manner may be used.

For example, as shown in FIG. 29, the electronic device may include an input detection unit 2910, a processing unit 2920, a storage unit 2930, a display unit 2940, and a communication unit 2950.

The input detection unit 2910 is configured to support the electronic device in detecting input of the user, for example, an operation input by the user through a touch auxiliary tool such as a stylus, a touch stylus, or a touch ball, an operation input by the user through a finger, a voice operation, or a preset physical button pressing operation. The processing unit 2920 is configured to support the electronic device in obtaining content in an interface region selected by the user, and excerpting the obtained content to another interface based on an excerption operation of the user; and/or another processing process related to this application. The storage unit 2930 is configured to support the electronic device in storing the content obtained by the processing unit 2920 and/or other content or data related to this application. The display unit 2940 is configured to support the electronic device in displaying an interface, such as the first interface, the second interface, the third interface, a fourth interface, or the like, and/or another interface related to this application. The communication unit 2950 is configured to support the electronic device in communicating with another device, for example, sharing the obtained content to the transfer station, and/or another communication process related to this application.

In an example, the communication unit 2950 may include a radio frequency circuit. Specifically, the electronic device may receive and send radio signals through the radio frequency circuit. The radio frequency circuit usually includes but is not limited to an antenna, at least one amplifier, a transceiver, a coupler, a low noise amplifier, a duplexer, and the like. In addition, the radio frequency circuit may further communicate with another device through wireless communication. The wireless communication may use any communication standard or protocol, including but not limited to a global system for mobile communication, a general packet radio service, code division multiple access, wideband code division multiple access, long term evolution, an email message, a short message service, and the like.

It should be understood that each module in the electronic device may be implemented in a form of software and/or hardware. This is not specifically limited. In other words, a smart jump rope/the electronic device is presented in a form of a functional module. The "module" herein may be an application-specific integrated circuit ASIC, a circuit, a processor that executes one or more software or firmware programs and a memory, an integrated logic circuit, and/or another component that can provide the foregoing functions.

In an optional manner, when data transmission is implemented by using software, data transmission may be completely or partially implemented in a form of a computer program product. The computer program product includes one or more computer instructions. When the computer program instructions are loaded and executed on a computer, the procedures or functions according to embodiments of this application are completely or partially implemented. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired manner (for example, a coaxial cable, an optical fiber, or a digital subscriber line (digital subscriber line, DSL)) or a wireless manner (for example, infrared, radio, microwave, or the like). The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive (solid state disk, SSD)), or the like.

Method or algorithm steps described in combination with embodiments of this application may be implemented by hardware, or may be implemented by a processor by executing software instructions. The software instructions may include a corresponding software module. The software module may be stored in a RAM, a flash memory, a ROM, an EPROM, an EEPROM, a register, a hard disk, a removable hard disk, a CD-ROM, or a storage medium in any other form well-known in the art. For example, the storage medium is coupled to the processor, so that the processor can read information from the storage medium and write information to the storage medium. Certainly, the storage medium may alternatively be a component of the processor. The processor and the storage medium may be disposed in an ASIC. In addition, the ASIC may be located in an electronic device. Certainly, the processor and the storage medium may alternatively exist in the electronic device as discrete components.

Based on the descriptions of the implementations, a person skilled in the art may clearly understand that for the purpose of convenient and brief descriptions, division into the foregoing functional modules is merely used as an example for descriptions. During actual application, the functions may be allocated to different functional modules for implementation based on a requirement. In other words, an inner structure of an apparatus is divided into different functional modules to implement all or some of the functions described above.

## Claims

1. A content excerption method, wherein the method is applied to an electronic device, and the method comprises:
displaying, by the electronic device, a first interface;
receiving, by the electronic device, a first operation of a user, wherein the first operation is used to represent an excerption intention of the user for content on the first interface, and the excerption intention comprises excerpting the content in a picture form or excerpting the content in an editable form; and
obtaining, by the electronic device in a corresponding form based on the excerption intention corresponding to the first operation, content in a first interface region selected by the user on the first interface.

2. The method according to claim 1, wherein the user is not granted permission to obtain content in the editable form on the first interface.

3. The method according to claim 1 or 2, wherein the interface region comprises but is not limited to one or more of the following types of content: a picture, text, a symbol, a formula, a table, an icon, a figure, a line, or a video playing sub-interface.

4. The method according to any one of claims 1 to 3, wherein when the excerption intention of the user is excerpting the content in the editable form, the obtaining, by the electronic device in a corresponding form based on the excerption intention corresponding to the first operation, content in a first interface region selected by the user on the first interface comprises:
extracting, by the electronic device, the content in the first interface region in the editable form.

5. The method according to claim 4, wherein the first operation is a touch and hold operation performed by the user on the first interface through a touch auxiliary tool, and after the electronic device receives the first operation, the method further comprises:
displaying, by the electronic device, a start cursor at a position corresponding to the touch and hold operation; and
determining, by the electronic device in response to an operation of moving a position of the start cursor by the user, the first interface region selected by the user on the first interface.

6. The method according to claim 4 or 5, wherein the extracting, by the electronic device, the content in the first interface region in the editable form comprises:
extracting, by the electronic device, the content in the first interface region in the editable form by using a text detection algorithm.

7. The method according to any one of claims 1 to 3, wherein when the excerption intention of the user is excerpting the content in the picture form, the obtaining, by the electronic device in a corresponding form based on the excerption intention corresponding to the first operation, content in a first interface region selected by the user on the first interface comprises:
capturing, by the electronic device, the first interface region in the picture form.

8. The method according to claim 7, wherein the first operation is a box-select operation performed by the user on the first interface through a touch auxiliary tool.

9. The method according to claim 8, wherein the method further comprises:
adaptively optimizing, by the electronic device, an interface region corresponding to the box-select operation, and determining the first interface region.

10. The method according to any one of claims 1 to 9, wherein the method further comprises:
copying or cutting and pasting, by the electronic device, the obtained content in the first interface region to a corresponding position on the second interface in response to a second operation of the user.

11. The method according to claim 10, wherein
the second operation is an operation of dragging the obtained content in the first interface region from the first interface region to the second interface by the user.

12. The method according to claim 10 or 11, wherein the method further comprises:
obtaining, by the electronic device in a corresponding form based on an excerption intention corresponding to a third operation of the user in response to the third operation, content in a second interface region selected by the user on the first interface; and
copying or cutting and pasting, by the electronic device, the obtained content in the second interface region to a corresponding position on the third interface in response to a fourth operation of the user.

13. The method according to claim 12, wherein the third interface is the second interface on which the obtained content in the first interface region is copied or cut and pasted, or the third interface is not the second interface on which the obtained content in the first interface region is copied or cut and pasted.

14. The method according to claim 10 or 11, wherein the method further comprises:
obtaining, by the electronic device in a corresponding form based on an excerption intention corresponding to a third operation of the user in response to the third operation, content in an interface region selected by the user on the third interface; and
copying or cutting and pasting, by the electronic device, the obtained content in the second interface region to a corresponding position on the third interface in response to a fourth operation of the user.

15. The method according to claim 14, wherein the third interface is the first interface, or the third interface is not the first interface.

16. The method according to any one of claims 1 to 9, wherein the method further comprises:
saving, by the electronic device, the obtained content in the first interface region in response to a saving operation of the user.

17. The method according to any one of claims 1 to 9, wherein the method further comprises:
making, by the electronic device, a corresponding modification to the obtained content in the first interface region in response to an editing operation of the user.

18. The method according to claim 17, wherein the modification made by the electronic device to the obtained content in the first interface region comprises one or more of the following: drawing a line, doodling, cropping, rotation, editing text, adding a sticker, adding a filter, adjusting a color, adding a border, covering with mosaics, deleting text, adding text, changing a font, changing a font size, or changing a style.

19. The method according to any one of claims 1 to 9, wherein the method further comprises:
displaying, by the electronic device, a sharing option interface in response to a sharing operation of the user, so that the user selects a sharing object option for sharing the obtained content in the first interface region.

20. The method according to any one of claims 1 to 9, wherein the method further comprises:
pinning, by the electronic device, the obtained content in the first interface region to a target position in response to an operation of pinning the obtained content in the first interface region to the target position by the user.

21. The method according to any one of claims 1 to 20, wherein the method further comprises:
after an excerption function is enabled, entering, by the electronic device, the excerption state.

22. An electronic device, wherein the electronic device comprises:
one or more sensors, configured to receive an operation of a user;
a memory, configured to store computer program instructions; and
a processor, configured to execute the instructions, so that the electronic device performs the method according to any one of claims 1 to 21.

23. A computer-readable storage medium, wherein the computer-readable storage medium stores computer-readable instructions, and when the computer-readable instructions are executed by a processing circuit, the method according to any one of claims 1 to 21 is implemented.

24. A chip system, wherein the chip system comprises a processing circuit and a storage medium, and the storage medium stores instructions; and when the instructions are executed by the processing circuit, the method according to any one of claims 1 to 21 is implemented.

25. A computer program product, wherein the computer program product comprises computer-readable instructions, and when the computer-readable instructions are executed, the method according to any one of claims 1 to 21 is implemented.
